# EUROPEAN PATENT APPLICATION

(11) **EP 3 460 000 A1**
(43) Date of publication of application: **27.03.2019**
(21) Application number: 17799476.1
(22) Date of filing: 18.05.2017
(51) Int. Cl.: C08L 29/14, B32B 27/22, B32B 27/30, C03C 27/12, C08J 5/18, C08L 53/02

(54) **RESIN COMPOSITION, FILM, AND INTERLAYER FOR LAMINATED GLASS**

(30) Priority: 18.05.2016 JP 2016099897
(71) Applicant: Kuraray Co., Ltd., Okayama 710-0801 (JP)
(72) Inventor: YASUDA, Hirotaka, Kurashiki-shi Okayama 713-8550 (JP); ISOUE, Koichiro, Kurashiki-shi Okayama 713-8550 (JP)
(74) Representative: Müller-Boré & Partner Patentanwälte PartG mbB
(86) International application number: PCT/JP2017/018721
(87) International publication number: WO 2017/200052

(57) **Abstract**

The present invention is intended to provide a resin composition that gives a film having excellent transparency when molded.

The present invention relates to a resin composition including 0.5 to 100 parts by mass of a thermoplastic polyolefinic resin (B) with respect to 100 parts by mass of a polyvinyl acetal resin (A), wherein when the resin composition is molded into a film having a thickness of 0.76 ± 0.03 mm and the film is laminated between two sheets of float glass having a thickness of 3 mm, the laminate has a haze of less than 5%. It is preferable that a phase of the thermoplastic polyolefinic resin (B) is dispersed as an island component in a continuous phase of the polyvinyl acetal resin (A).

## Description

### Technical Field

The present invention relates to a resin composition, a film, and an interlayer film for laminated glass.

### Background Art

Polyvinyl acetals, which are represented by polyvinyl butyral, have excellent adhesiveness or compatibility to a variety of organic and inorganic base materials and excellent solubility in organic solvents. Thus, polyvinyl acetals are widely utilized as various adhesives, binders for ceramics, various inks and coating materials and the like, and interlayer films for safety glass.

Among these, a film containing polyvinyl acetal and a plasticizer has excellent adhesiveness to glass, excellent transparency, and excellent mechanical strength and flexibility, and therefore, such films are widely utilized as interlayer films for laminated glasses (hereinafter, an interlayer film for laminated glass may be simply referred to as "interlayer film").

It is known that glass plates used for windowpanes and the like have excellent durability and lighting properties, but have very poor damping performance (tan δ with respect to bending vibration). For this reason, deterioration of the sound insulation properties by a resonant state caused by the vibration of glass and incident sound waves, that is, the coincidence effect, is noticeable.

Conventionally, in a case in which glass is installed at a place where sound insulation is required, such as a window, methods of increasing the sound insulation effect by means of weight by increasing the thickness of the glass, or increasing the sound insulation effect using a laminated glass formed by laminating two or more sheets of glass plates and an interlayer film, have been adopted. In the latter method of using an interlayer film, the sound insulation properties of a windowpane are enhanced by using an interlayer film having damping performance, and the interlayer film also has an ability of converting vibration energy to heat energy and thereby absorbing the vibration energy.

Regarding a method of improving the sound insulation properties of an interlayer film, for example, an interlayer film in which a layer formed from a polyvinyl acetal having a reduced amount of hydroxyl groups and a plasticizer is interposed between plasticized polyvinyl butyral that are used as conventional interlayer films, has been suggested, however, there is still room for further improvement in the sound insulation performance. Furthermore, as an interlayer film for laminated glass having various excellent performances such as sound insulation properties, for example, an interlayer film obtained by laminating a copolymer of polystyrene and a rubber-based resin with a plasticized polyvinyl acetal-based resin has been suggested (see, for example, Patent Literatures 1 to 3). Furthermore, for the purpose of obtaining an interlayer film having excellent transparency, penetration resistance, and the like, an interlayer film having a polyolefin resin such as polyethylene sandwiched and fixed between plasticized polyvinyl butyral resin has been suggested (see, for example, Patent Literature 4).

However, from the viewpoint of the production cost, an interlayer film for laminated glass is generally produced using an extruder. The laminated sound-insulating multilayer interlayer film for laminated glass described above is produced by a co-extrusion method; however, when an interlayer film for laminated glass is produced by this method, a certain amount of trim or out-of-specification products that have non-uniform composition or thickness and cannot be release as manufactured products, is generated.

Generally, such trim or out-of-specification products can be recycled by melt-kneading the trim or products and extrusion molding the melt-kneaded product.

Meanwhile, it is not known that a trim or an out-of-specification product of an interlayer film obtained by laminating a copolymer of polystyrene and a rubber-based resin with a plasticized polyvinyl acetal-based resin may be recycled and utilized as an interlayer film for laminated glass. A thermoplastic resin composition including a styrenic elastomer, a polyvinyl acetal resin, and a polar group-containing polypropylene-based resin has been suggested (see

Patent Literature 5). However, this composition is intended to provide a thermoplastic resin composition that has excellent flexibility, mechanical characteristics, molding processability, and heat resistance and is capable of adhesion to ceramics or metals at low temperature. Thus, there is no disclosure about using the thermoplastic resin composition thus obtainable for an interlayer film for laminated glass.

### Citation List

### Patent Literature

Patent Literature 1: JP 2007-91491 A
Patent Literature 2: WO 2011/16494 A
Patent Literature 3: WO 2011/ 16495 A
Patent Literature 4: JP H08-73244 A
Patent Literature 5: WO 2012/26501 A

### Summary of Invention

### Technical Problem

In the case of using a mixture of polyvinyl acetal compositions having different compositions as the above-mentioned trim or out-of-specification product, the interlayer film for laminated glass thus obtainable may become opaque. Particularly, in the above-described laminated sound-insulating interlayer film for laminated glass, since resins having different polarities and the like are used in the various layers, it is difficult to compatibilize those polyvinyl acetals, and an interlayer film for laminated glass obtained by recycling and using a trim or an out-of-specification product generated in the production process for the interlayer film for laminated glass, may have inferior transparency. Furthermore, it may be considered that the thermoplastic resin composition suggested in Patent Literature 5 is obtained by recycling a trim or an out-of-specification product of an interlayer film obtained by laminating a copolymer of polystyrene and a rubber-based resin with a plasticized polyvinyl acetal-based resin; however, it is difficult to use this thermoplastic resin composition as an interlayer film for laminated glass, from the viewpoint of transparency.

The present invention is intended to solve the problems described above, and it is an object of the present invention to provide a resin composition including polyvinyl acetal and a thermoplastic polyolefinic resin, which produces a film having excellent transparency when the resin composition is molded, and to provide a film obtainable from the resin composition. Furthermore, it is another object of the invention to provide an interlayer film for laminated glass, having a layer formed from a film obtainable from the resin composition, and a laminated glass obtained by using the interlayer film for laminated glass.

### Solution to Problem

According to the present invention, the above objects are achieved by providing:
[1] a resin composition comprising 0.5 to 100 parts by mass of a thermoplastic polyolefinic resin (B) with respect to 100 parts by mass of a polyvinyl acetal resin (A),
   wherein when the resin composition is molded into a film having a thickness of 0.76 ± 0.03 mm and the film is laminated between two sheets of float glass having a thickness of 3 mm, the laminate has a haze of less than 5%;
[2] the resin composition according to [1], wherein a phase of the thermoplastic polyolefinic resin (B) is dispersed as an island component in a continuous phase of the polyvinyl acetal resin (A);
[3] the resin composition according to [1] or [2], wherein a content of a vinyl alcohol unit in the polyvinyl acetal resin (A) is 15 mol% to 50 mol%;
[4] the resin composition according to [3], wherein the content of the vinyl alcohol unit in the polyvinyl acetal resin (A) is 30 mol% to 50 mol%;
[5] the resin composition according to any one of [1] to [4], comprising a compound (a) other than the thermoplastic polyolefinic resin (B), the compound (a) having a higher refractive index than the polyvinyl acetal resin (A);
[6] the resin composition according to [5], wherein the compound (a) has a hydroxyl group;
[7] the resin composition according to any one of [1] to [6], comprising a compound (b) other than the polyvinyl acetal resin (A), the compound (b) having a lower refractive index than the thermoplastic polyolefinic resin (B);
[8] the resin composition according to any one of [1] to [7], wherein the polyvinyl acetal resin (A) is a polyvinyl acetal resin (A') having an aromatic group;
[9] the resin composition according to any one of [1] to [8], wherein the thermoplastic polyolefinic resin (B) is a copolymer of an aromatic vinyl monomer and a vinyl monomer other than the aromatic vinyl monomer or a conjugated diene monomer, or a hydrogenated product of the copolymer;
[10] the resin composition according to [9], wherein the thermoplastic polyolefinic resin (B) is a block copolymer.
[11] the resin composition according to [9] or [10], wherein a content of the aromatic vinyl monomer unit in the thermoplastic polyolefinic resin (B) is 25% by mass or less;
[12] the resin composition according to any one of [1] to [11], wherein the thermoplastic polyolefinic resin (B) is a thermoplastic polyolefinic resin (B1) having none of functional groups selected from a carboxyl group, a boronic acid group, a silanol group, an epoxy group, and an isocyanate group;
[13] the resin composition according to any one of [1] to [11], wherein the thermoplastic polyolefinic resin (B) comprises a thermoplastic polyolefinic resin (B1) having none of functional groups selected from a carboxyl group, a boronic acid group, a silanol group, an epoxy group, and an isocyanate group; and a functional group-containing polyolefinic polymer (B2) containing at least one functional group selected from the group consisting of a carboxyl group, a boronic acid group, a silanol group, an epoxy group, and an isocyanate group;
[14] the resin composition according to [13], wherein a mass ratio B1/B2 of a content of the thermoplastic polyolefinic resin (B1) and a content of the functional group-containing polyolefinic polymer (B2) is 1/99 to 99.9/0.1;
[15] the resin composition according to any one of [1] to [14], further comprising a plasticizer in an amount of 1 to 100 parts by mass with respect to 100 parts by mass of the polyvinyl acetal resin (A);
[16] the resin composition according to [15], wherein 10% to 100% by mass of the plasticizer is a compound having a hydroxyl group;
[17] a film comprising the resin composition according to any one of [1] to [16];
[18] an interlayer film for laminated glass, the interlayer film comprising a layer formed from the film according to [17];
[19] the interlayer film for laminated glass according to [18], the interlayer film comprising at least two layers of the layer formed from the film, further comprising a resin layer containing the thermoplastic polyolefinic resin (B),
   wherein one layer of the layers formed from the film is disposed on a first surface of the resin layer, and another layer of the layers formed from the film is disposed on a second surface of the resin layer;
[20] an interlayer film for laminated glass, the interlayer film comprising layer A formed from composition A including a polyvinyl acetal resin (A) having a content of a vinyl alcohol unit of 30 mol% to 50 mol% as measured according to JIS K 6728; and layer B formed from composition B including a thermoplastic polyolefinic resin (B),
   wherein when the interlayer film for laminated glass is melt-kneaded and then molded into a film having a thickness of 0.76 ± 0.03 mm, and the film is laminated between two sheets of float glass having a thickness of 3 mm, the laminate has a haze of less than 5%;
[21] an interlayer film for laminated glass, the interlayer film comprising layer A formed from composition A including a polyvinyl acetal resin (A) and a compound (a) other than a thermoplastic polyolefinic resin (B), the compound (a) having a higher refractive index than the polyvinyl acetal resin (A); and layer B formed from composition B including a thermoplastic polyolefinic resin (B),
   wherein when the interlayer film for laminated glass is melt-kneaded and then molded into a film having a thickness of 0.76 ± 0.03 mm, and the film is laminated between two sheets of float glass having a thickness of 3 mm, the laminate has a haze of less than 5%;
[22] an interlayer film for laminated glass, the interlayer film comprising layer A formed from composition A including a polyvinyl acetal resin (A); and layer B formed from composition B including a thermoplastic polyolefinic resin (B) and a compound (b) other than the polyvinyl acetal resin (A), the compound (b) having a lower refractive index than the thermoplastic polyolefinic resin (B),
   wherein when the interlayer film for laminated glass is melt-kneaded and then molded into a film having a thickness of 0.76 ± 0.03 mm, and the film is laminated between two sheets of float glass having a thickness of 3 mm, the laminate has a haze of less than 5%;
[23] an interlayer film for laminated glass, the interlayer film comprising layer A including a polyvinyl acetal resin modified with an aromatic group (A'); and layer B including a thermoplastic polyolefinic resin (B),
   wherein when the interlayer film for laminated glass is melt-kneaded and then molded into a film having a thickness of 0.76 ± 0.03 mm, and the film is laminated between two sheets of float glass having a thickness of 3 mm, the laminate has a haze of less than 5%;
[24] the interlayer film for laminated glass according to any one of [21] to [24], wherein the thermoplastic polyolefinic resin (B) includes a thermoplastic polyolefinic resin (B1) having none of functional groups selected from a carboxyl group, a boronic acid group, a silanol group, an epoxy group, and an isocyanate group; and a thermoplastic polyolefinic resin (B2) having at least one functional group selected from the group consisting of a carboxyl group, a boronic acid group, a silanol group, an epoxy group, and an isocyanate group;
[25] a laminated glass comprising the interlayer film for laminated glass according to any one of [18] to [24] disposed between two sheets of glass;
[26] a method for producing a polyvinyl acetal-based resin composition, the method comprising adding the resin composition according to any one of [1] to [17] to the polyvinyl acetal resin (A) such that a mass ratio between the polyvinyl acetal resin (A) and the resin composition is 1/99 to 99/1;
[27] a method for producing a polyvinyl acetal-based resin composition, the method comprising adding the resin composition according to any one of [1] to [17] to the thermoplastic polyolefinic resin (B) such that a mass ratio between the thermoplastic polyolefinic resin (B) and the resin composition is 1/99 to 99/1.

### Advantageous Effects of Invention

According to the present invention, a resin composition including a polyvinyl acetal and a thermoplastic polyolefinic resin, the resin composition being capable of producing a film having excellent transparency, and a film obtainable from the resin composition can be provided. Furthermore, an interlayer film for laminated glass having a layer formed from a film obtainable from the resin composition, and a laminated glass using the interlayer film for laminated glass can be provided.

### Brief Description of Drawings

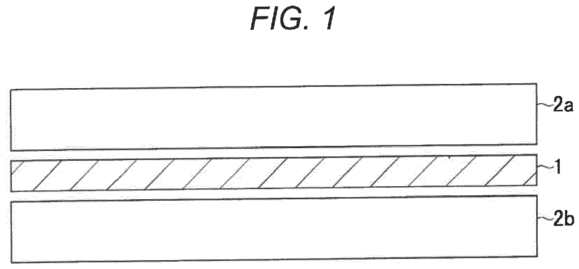

Fig. 1 is an example of a cross-sectional view of the configuration of a laminate.

### Description of Embodiments

The resin composition of the present invention includes 0.5 to 100 parts by mass of a thermoplastic polyolefinic resin (B) with respect to 100 parts by mass of a polyvinyl acetal resin (A), and when the resin composition is molded into a film having a thickness of 0.76 ± 0.03 mm, and the film is laminated between two sheets of float glass having a thickness of 3 mm, the laminate has a haze of less than 5%. The resin composition of the present invention is such that the transparency of a film molded from the resin composition is enhanced by adjusting the difference between the refractive index of a continuous phase formed from a polyvinyl acetal resin (A) and a phase of an island component formed from a thermoplastic polyolefinic resin (B), or by adjusting the dispersibility of the island component. Thus, even in a case in which a polyvinyl acetal resin (A) and a thermoplastic polyolefinic resin (B) included in a trim or an out-of-specification product are used, a film having excellent transparency is obtained.

### (Polyvinyl acetal resin (A))

The polyvinyl acetal resin (A) is usually composed of a vinyl acetal unit, a vinyl alcohol unit, and a vinyl acetate unit, and the contents of these respective units in the polyvinyl acetal resin (A) can be measured according to, for example, JIS K 6728 "Testing method for polyvinyl butyral" or a nuclear magnetic resonance (NMR) method.

In a case in which the polyvinyl acetal resin (A) includes a unit other than a vinyl acetal unit, the amount of the vinyl alcohol unit and the amount of the vinyl acetate unit are measured, the amounts of these two units are subtracted from the amount of a vinyl acetal unit in the case of not including a unit other than the vinyl acetal unit, and thereby the amount of the remaining vinyl acetal unit can be calculated.

The content of the vinyl alcohol unit in the polyvinyl acetal resin (A) is preferably 15 mol% or more, more preferably 17 mol% or more, even more preferably 20 mol% or more, and particularly preferably 30 mol% or more. Furthermore, the content of the vinyl alcohol unit in the polyvinyl acetal resin (A) is preferably 50 mol% or less, more preferably 40 mol% or less, and even more preferably 38 mol% or less. As the content of the vinyl alcohol unit in the polyvinyl acetal resin (A) becomes larger, dispersibility of the thermoplastic polyolefinic resin (B) increases, and a more uniform film is formed. Furthermore, as the content of the vinyl alcohol unit in the polyvinyl acetal resin (A) becomes larger, the refractive index tends to increase, and the difference between the refractive index of the polyvinyl acetal resin (A) and the refractive index of the thermoplastic polyolefinic resin (B) becomes small. Therefore, transparency of a film thus obtainable is enhanced. When the content of the vinyl alcohol unit in the polyvinyl acetal resin (A) is 15 mol% or more, the transparency of a film obtainable from the resin composition of the present invention is enhanced, and when the content is 50 mol% or less, bleed-out of the plasticizer is not likely to occur. Particularly, in a case in which the resin composition of the present invention does not include all of the compound (a), compound (b), and polyvinyl acetal resin having an aromatic group (A'), which will be described below, the content of the vinyl alcohol unit is preferably 30 mol% or more. In this case, although the reasons are not clearly understood, when the content of the vinyl alcohol unit is 30 mol% or more, the transparency of a film obtainable from the resin composition is enhanced.

The content of the vinyl acetate unit in the polyvinyl acetal resin (A) is preferably 30 mol% or less. When the content of the vinyl acetate unit exceeds 30 mol%, blocking is likely to occur at the time of producing the polyvinyl acetal resin (A), and therefore, production becomes difficult. The content of the vinyl acetate unit is preferably 20 mol% or less.

The viscosity average degree of polymerization of the polyvinyl alcohol that serves as a raw material of the polyvinyl acetal resin (A) is preferably 100 or higher, more preferably 300 or higher, more preferably 400 or higher, even more preferably 600 or higher, particularly preferably 700 or higher, and most preferably 750 or higher. If the viscosity average degree of polymerization of the polyvinyl alcohol is too low, penetration resistance and creep resistance, particularly creep resistance under high-temperature and high-humidity conditions such as 85°C and 85% RH, may be deteriorated. Furthermore, regarding the viscosity average degree of polymerization of the polyvinyl alcohol, the viscosity average degree of polymerization is preferably 5,000 or less, more preferably 3,000 or less, even more preferably 2,500 or less, particularly preferably 2,300 or less, and most preferably 2,000 or less. When the viscosity average degree of polymerization of the polyvinyl alcohol is higher than 5,000, molding of a resin film may become difficult.

Furthermore, in order to enhance the lamination suitability of the interlayer film for laminated glass thus obtainable and to thereby obtain a laminated glass having superior external appearance, the viscosity average degree of polymerization of the polyvinyl alcohol in the case of using a plasticizer is preferably 2,500 or lower, more preferably 2,000 or lower, and even more preferably 1,800 or lower. In a case in which no plasticizer is used or in a case in which a plasticizer is used in an amount of less than 10 parts by mass with respect to 100 parts by mass of the polyvinyl acetal resin (A), the viscosity average degree of polymerization of the polyvinyl alcohol is preferably 1,800 or lower, more preferably 1,500 or lower, and even more preferably 1,100 or lower.

Incidentally, according to JIS K 6728, since the viscosity average degree of polymerization of the polyvinyl acetal resin (A) coincides with the viscosity average degree of polymerization of the polyvinyl alcohol that serves as a raw material, a preferred viscosity average degree of polymerization of the polyvinyl alcohol described above coincides with a preferred viscosity average degree of polymerization of the polyvinyl acetal resin (A).

Since the amount of the vinyl acetate unit of the polyvinyl acetal resin (A) thus obtainable is preferably set to 30 mol% or less, it is preferable to use a polyvinyl alcohol having a degree of saponification of 70 mol% or higher. When the degree of saponification of the polyvinyl alcohol is less than 70 mol%, transparency or heat resistance of the resin may deteriorate, and the reactivity with aldehydes may also deteriorate. The degree of saponification is more preferably 95 mol% or higher.

The viscosity average degree of polymerization and the degree of saponification of the polyvinyl alcohol can be measured based on, for example, JIS K 6726 "Polyvinyl alcohol testing method".

A polyvinyl acetal resin (A) can be produced by a conventionally known method, and representatively, a polyvinyl acetal resin can be produced by acetalizing polyvinyl alcohol using an aldehyde. Specifically, a method of obtaining a powder of the polyvinyl acetal resin (A) by dissolving polyvinyl alcohol in warm water, maintaining the aqueous solution thus obtained at a predetermined temperature, for example, 0°C or higher, preferably 10°C or higher, 90°C or lower, and preferably 20°C or lower, adding an acid catalyst and an aldehyde as needed, performing an acetalization reaction with stirring, subsequently raising the reaction temperature to 70°C to age the reaction product, completing the reaction, and then performing neutralization, washing with water, and drying, may be adopted.

The aldehyde used for the acetalization of the polyvinyl alcohol is preferably an aldehyde having carbon number of 1 or more and 12 or less. When the carbon number of the aldehyde exceeds 12, the reactivity of acetalization decreases, and blocks of a resin is likely to occur during the reaction. Thus, it is likely to have difficulties in the synthesis of the polyvinyl acetal resin (A).

The aldehyde is not particularly limited, and examples thereof include aliphatic, aromatic, and alicyclic aldehydes such as formaldehyde, acetaldehyde, propionaldehyde, n-butylaldehyde, isobutylaldehyde, valeraldehyde, isovaleraldehyde, n-hexylaldehyde, 2-ethylbutylaldehyde, n-heptylaldehyde, n-octylaldehyde, 2-ethylhexylaldehyde, n-nonylaldehyde, n-decylaldehyde, benzaldehyde, and cinnamaldehyde. Among these, an aliphatic aldehyde having carbon number of 2 or more and 6 or less is preferred, and above all, butyl aldehyde is particularly preferred. Furthermore, the aldehydes described above may be used alone, or two or more types thereof may be used in combination. Furthermore, it is also acceptable to use a multifunctional aldehyde, an aldehyde having other functional group, and the like in combination in a small amount in the range of 20% by mass or less with respect to the total aldehydes.

Regarding the polyvinyl acetal resin (A), a polyvinyl butyral resin is most preferred; however, regarding the polyvinyl butyral resin, a modified polyvinyl butyral resin obtained by subjecting a polyvinyl alcohol-based polymer obtainable by saponifying a copolymer of a vinyl ester and another monomer to butyralization using butyl aldehyde, can be used. Here, examples of the other monomer include α-olefins such as ethylene, propylene, n-butene, and isobutylene; acrylic acid and salts thereof; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and salts thereof; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide; acrylamide derivatives such as N-methylacrylamide, N-ethylacrylamide, N,N-dimethylacrylamide, diacetone acrylamide, acrylamidopropanesulfonic acid and salts thereof, acrylamidopropyldimethylamine and salts thereof or quaternary salts thereof, and N-methylolacrylamide, and derivatives thereof; methacrylamide derivatives such as methacrylamide, N-methylmethacrylamide, N-ethylmethacrylamide, methacrylamidopropanesulfonic acid and salts thereof, methacrylamidopropyldimethylamine and salts thereof or quaternary salts thereof, and N-methylolmethacrylamide and derivatives thereof; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride; unsaturated dicarboxylic acids such as maleic acid, itaconic acid, and fumaric acid, and salts thereof, esters thereof, or anhydrides thereof; vinylsilyl compounds such as vinyltrimethoxysilane; and isopropenyl acetate. In addition to those, products obtained by modifying a polyvinyl alcohol-based polymer or a polyacetal resin, which serves as a raw material, using a graft reaction or another modification reaction can be used.

Furthermore, regarding the polyvinyl acetal resin (A), a polyvinyl acetal resin having an aromatic group (A') can be used. When the polyvinyl acetal resin (A) has an aromatic group, the transparency of a film thus obtainable can be enhanced. Regarding a method of introducing an aromatic group into the polyvinyl acetal resin (A), for example, a method of co-acetalizing an aromatic aldehyde such as benzaldehyde, cinnamaldehyde, hexylcinnamaldehyde, hydrocinnamaldehyde, 1-benzaldehyde-2-sulfonic acid, 4-chlorobenzaldehyde, 4-t-butylphenylacetaldehyde, 2-phenylpropionaldehyde, and derivatives thereof, with another aldehyde may be adopted. Examples of the other aldehyde that is co-acetalized with an aromatic aldehyde include formaldehyde, acetaldehyde, propionaldehyde, n-butyraldehyde, isobutyraldehyde, valeraldehyde, isovaleraldehyde, n-hexylaldehyde, 2-ethylbutylaldehyde, n-heptylaldehyde, n-octylaldehyde, 2-ethylhexylaldehyde, n-nonylaldehyde, and n-decylaldehyde. The amount of modification by the aromatic aldehyde with respect to all the aldehydes is preferably 0.1 mol% or more, more preferably 0.5 mol% or more, and even more preferably 1 mol% or more. Furthermore, the amount of modification by an aromatic aldehyde with respect to all the aldehyes is preferably 80 mol% or less, more preferably 40 mol% or less, and even more preferably 20 mol% or less. When the amount of modification by an aromatic aldehyde is 0.1 mol% or more, the transparency of a film thus obtainable is sufficiently enhanced, and when the amount of modification by an aromatic aldehyde is 80 mol% or less, water-solubility of the polyvinyl acetal resin (A') at the time of production can be secured, and a uniform acetalization product can be produced.

In addition to that, regarding a method of modifying the polyvinyl acetal resin (A) with an aromatic group, a method of modifying the polyvinyl acetal resin (A) using an aromatic compound having a functional group capable of reacting with a hydroxyl group of the polyvinyl acetal resin (A) may be mentioned. The functional group capable of reacting with a hydroxyl group is not particularly limited; however, examples include a carboxyl group, an epoxy group, an isocyanate group, a silanol group, and a lactam group. Examples of the aromatic compound include aromatic carboxylic acids such as benzoic acid, toluic acid, α-naphthalenecarboxylic acid, β-naphthalenecarboxylic acid, methylnaphthalenecarboxylic acid, and phenyl acetate, or derivatives thereof (anhydrides, acid chlorides, esters, and the like); multifunctional aromatic carboxylic acids such as terephthalic acid, isophthalic acid, orthophthalic acid, naphthalenedicarboxylic acid, biphenyldicarboxylic acid, trimesic acid, trimellitic acid, pyromellitic acid, and 1,2,4,5-benzenetetracarboxylic acid, or derivatives thereof; aromatic monoisocyanates such as phenyl isocyanate; multifunctional aromatic isocyanates such as tolylene diisocyanate, diphenylmethane diisocyanate, xylylene diisocyanate, and naphthalene diisocyanate; monoepoxy compounds such as phenyl glycidyl ether, paraxylyl glycidyl ether, para-tert-butylphenyl glycidyl ether, and glycidyl benzoate; multifunctional epoxy compounds such as bisphenol A diglycidyl ether (bisphenol A type epoxy resin), bisphenol F diglycidyl ether, and brominated bisphenol A diglycidyl ether; multifunctional aromatic glycidyl ethers such as resorcin type epoxy (for example, resorcinol diglycidyl ether), hydroquinone type epoxy, naphthalene type epoxy (for example, 1,6-bis(glycidyloxy)naphthalene), dicyclopentadiene type epoxy, biphenyl type epoxy, and bisphenol hydrogenated diglycidyl ether; silanol compounds such as triphenylsilanol and diphenyldihydroxysilane; and lactam compounds such as N-benzoylbutyrolactam.

### (Thermoplastic polyolefinic resin (B))

The resin composition of the present invention includes a thermoplastic polyolefinic resin (B). By incorporating the thermoplastic polyolefinic resin (B), the impact resistance of a film thus obtainable can be enhanced. Particularly, in a case in which the plasticizer is incorporated in a small amount or a plasticizer is not incorporated, an effect of enhancing the impact resistance is increased by dispersing the thermoplastic polyolefinic resin (B) as an island component. The content of the thermoplastic polyolefinic resin (B) is 0.5 part by mass or more, preferably 0.6 part by mass or more, and more preferably 1 part by mass or more, with respect to 100 parts by mass of the polyvinyl acetal resin (A). The content of the thermoplastic polyolefinic resin (B) is 100 parts by mass or less, preferably 40 parts by mass or less, and more preferably 20 parts by mass or less, with respect to 100 parts by mass of the polyvinyl acetal resin (A). When the content of the thermoplastic polyolefinic resin (B) is smaller than 0.5 part by mass with respect to 100 parts by mass of the polyvinyl acetal resin (A), the amount of trim that can be recycled becomes small, and an impact resistance improving effect brought by addition of an elastomer is not observable. When the content is larger than 100 parts by mass, the transparency of a film obtainable from the resin composition is deteriorated.

The resin composition of the present invention is preferably such that a phase of the thermoplastic polyolefinic resin (B) is disposed as an island component in a continuous phase of the polyvinyl acetal resin (A).

Regarding the thermoplastic polyolefinic resin (B), a thermoplastic polyolefinic resin (B1) (hereinafter, may be simply referred to as "thermoplastic polyolefinic resin (B1)") that does not have any functional group selected from a carboxyl group, a boronic acid group, a silanol group, an epoxy group, and an isocyanate group, or a polyolefinic polymer (B2) (hereinafter, may be simply referred to as "functional group-containing polyolefinic polymer (B2)") containing at least one functional group selected from the group consisting of a carboxyl group, a boronic acid group, a silanol group, an epoxy group, and an isocyanate group, can be used. Examples of the thermoplastic polyolefinic resin (B) include thermoplastic elastomers such as a polystyrenic elastomer (soft segment: polybutadiene, polyisoprene or the like/hard segment: polystyrene), a polyolefinic elastomer (soft segment: ethylene propylene rubber/hard segment: polypropylene), a polyvinyl chloride-based elastomer (soft segment: polyvinyl chloride/hard segment: polyvinyl chloride), a polyurethane-based elastomer (soft segment: polyether or polyester/hard segment: polyurethane), a polyester-based elastomer (soft segment: polyether/hard segment: polyester), a polyamide-based elastomer (soft segment: polypropylene glycol, polytetramethylene ether glycol, or polyester-based or polyether-based/hard segment: polyamide <nylon resin>), and a polybutadiene-based elastomer (soft segment: amorphous butyl rubber/hard segment: syndiotactic 1,2-polybutadiene resin). Furthermore, the thermoplastic polyolefinic resins (B) may be used alone, or two or more types thereof may be used in combination. Examples of the thermoplastic polyolefinic resin (B1) include those listed above as examples of the thermoplastic polyolefinic resin (B), and resins that do not have any functional group selected from a carboxyl group, a boronic acid group, a silanol group, an epoxy group, and an isocyanate group. It is one preferred embodiment that the thermoplastic polyolefinic resin (B) is a thermoplastic polyolefinic resin (B1).

Regarding the thermoplastic polyolefinic resin (B1), from the viewpoint of acquiring both moldability and sound insulation properties, it is preferable to use a thermoplastic elastomer, and it is more preferable to use, for example, crosslinked rubbers such as natural rubber, isoprene rubber, butadiene rubber, chloroprene rubber, nitrile rubber, butyl rubber, ethylene propylene rubber, urethane rubber, silicone rubber, chlorosulfonated polyethylene rubber, acrylic rubber, and fluororubber; or block copolymers having hard segments and soft segments (hereinafter, may be simply referred to as "block copolymers"). Furthermore, from the viewpoint of further enhancing the sound insulation properties, it is preferable to use a polystyrene-based elastomer.

It is preferable that the thermoplastic polyolefinic resin (B1) is a copolymer of an aromatic vinyl monomer and a vinyl monomer or a conjugated diene monomer, or a hydrogenated product of the copolymer. It is preferable from the viewpoint of achieving a balance between the functions as a rubber exhibiting sound insulation properties and the functions as a plastic, that the copolymer is a block copolymer having an aromatic vinyl polymer block and an aliphatic unsaturated hydrocarbon polymer block, for example, a polystyrenic elastomer.

In a case in which a copolymer of an aromatic vinyl polymer block and a vinyl polymer block or a conjugated diene polymer block, for example, a block copolymer having an aromatic vinyl polymer block and an aliphatic unsaturated hydrocarbon polymer block, is used as the thermoplastic polyolefinic resin (B1), the bonding form of these polymer blocks is not particularly limited, and the bonding form may be a linear form, a branched form, a radial form, or any one of bonding forms combining two or more of the aforementioned bonding forms. However, a linear bonding form is preferred.

Examples of the linear bonding form include, when an aromatic vinyl polymer block is denoted as a, and an aliphatic unsaturated hydrocarbon polymer block is denoted as b, a diblock copolymer represented by a-b; a triblock copolymer represented by a-b-a or b-a-b; a tetrablock copolymer represented by a-b-a-b; a pentablock copolymer represented by a-b-a-b-a or b-a-b-a-b; an (a-b)nX type copolymer (wherein X represents a coupling residue, and n represents an integer of 2 or greater); and mixtures thereof. Among these, a diblock copolymer or a triblock copolymer is preferred, and the triblock copolymer is more preferably a triblock copolymer represented by a-b-a.

The total amount of the aromatic vinyl monomer unit and the aliphatic unsaturated hydrocarbon monomer unit in the block copolymer is preferably 80% by mass or more, more preferably 95% by mass or more, and even more preferably 98% by mass or more, with respect to all of the monomer units. Meanwhile, the aliphatic unsaturated hydrocarbon polymer block in the block copolymer may be a block that has been partially or entirely hydrogenated.

The content of the aromatic vinyl monomer unit in the block copolymer, the content of the aromatic vinyl monomer unit in the block copolymer is preferably 40% by mass or less, more preferably 30% by mass or less, and even more preferably 25% by mass or less, with respect to all of the monomer units of the block copolymer. Furthermore, the content of the aromatic vinyl monomer unit is preferably 5% by mass or more, and more preferably 8% by mass or more. When the content of the aromatic vinyl monomer unit in the block copolymer is less than 5% by mass, molding of a film tends to be difficult. When the content of the aromatic vinyl monomer unit in the block copolymer exceeds 40% by mass, the transparency of a film thus obtainable tends to deteriorate. The content of the aromatic vinyl monomer unit in the block copolymer can be determined from the charging ratio of the respective monomers adopted at the time of synthesizing the block copolymer, and the measurement results of ¹H-NMR or the like of the block copolymer.

Furthermore, in a case in which the polyvinyl acetal resin (A'), the compound (a) and compound (b) that will be described below are not used, the content of the aromatic vinyl monomer unit in the block copolymer is preferably 30% by mass or less, more preferably 25% by mass or less, even more preferably 22% by mass or less, and particularly preferably 18% by mass or less, with respect to all of the monomer units of the block copolymer. When the content of the aromatic vinyl monomer unit is 30% by mass or less, the refractive index of the thermoplastic polyolefinic resin (B1) decreases, and consequently, the difference between the refractive index of the thermoplastic polyolefinic resin (B1) and the refractive index of the polyvinyl acetal resin (A) decreases. Therefore, it is speculated that transparency of a film thus obtainable is enhanced.

In the aromatic vinyl polymer block, if used in a small amount, a monomer other than the aromatic vinyl monomer may be copolymerized. The proportion of the aromatic vinyl monomer unit in the aromatic vinyl polymer block is preferably 80% by mass or more, more preferably 95% by mass or more, and even more preferably 98% by mass or more, with respect to all of the monomer units in the aromatic vinyl polymer block.

Examples of the aromatic vinyl monomer that constitutes the aromatic vinyl polymer block include styrene; alkylstyrenes such as α-methylstyrene, 2-methylstyrene, 3-methylstyrene, 4-methylstyrene, 4-propylstyrene, 4-cyclohexylstyrene, and 4-dodecylstyrene; arylstyrenes such as 2-ethyl-4-benzylstyrene, 4-(phenylbutyl)styrene, 1-vinylnaphthalene, and 2-vinylnaphthalene; halogenated styrenes; alkoxystyrenes; and vinylbenzoic acid esters. These may be used alone, or two or more types thereof may be used in combination.

The content of the aliphatic unsaturated hydrocarbon monomer unit in the block copolymer is preferably 60% by mass or more, more preferably 70% by mass or more, and even more preferably 80% by mass or more, with respect to all of the monomer units of the block copolymer. The content of the aliphatic unsaturated hydrocarbon monomer unit is preferably 95% by mass or less, more preferably 90% by mass or less, and even more preferably 88% by mass or less, with respect to all of the monomer units of the block copolymer. When the content of the aliphatic unsaturated hydrocarbon monomer unit in the block copolymer is less than 60% by mass, there is a tendency that the characteristics as the thermoplastic polyolefinic resin (B) are not easily exhibited. When the content of the aliphatic unsaturated hydrocarbon monomer unit in the block copolymer exceeds 95% by mass, molding of a film tends to become difficult. The content of the aliphatic unsaturated hydrocarbon monomer unit in the block copolymer can be determined from the charging ratio of the respective monomers used at the time of synthesizing the block copolymer, and the measurement results of ¹H-NMR and the like of the block copolymer.

In the aliphatic unsaturated hydrocarbon polymer block, if used in a small amount, a monomer other than the aliphatic unsaturated hydrocarbon monomer may be copolymerized. The proportion of the aliphatic unsaturated hydrocarbon monomer unit in the aliphatic unsaturated hydrocarbon polymer block is preferably 80% by mass or more, more preferably 95% by mass or more, and even more preferably 98% by mass or more, with respect to all of the monomer units in the aliphatic unsaturated hydrocarbon polymer block.

Examples of the aliphatic unsaturated hydrocarbon monomer that constitutes the aliphatic unsaturated hydrocarbon polymer block include ethylene, propylene, 1-butene, 1-pentene, 1-hexene, 1-heptene, 1-octene, 1-nonene, 1-decene, 4-phenyl-1-butene, 6-phenyl-1-hexene, 3-methyl-1-butene, 4-methyl-1-butene, 3-methyl-1-pentene, 4-methyl-1-pentene, 3-methyl-1-hexene, 4-methyl-1-hexene, 5-methyl-1-hexene, 3,3-dimethyl-1-pentene, 3,4-dimethyl-1-pentene, 4,4-dimethyl-1-pentene, vinylcyclohexane, hexafluoropropene, tetrafluoroethylene, 2-fluoropropene, fluoroethylene, 1,1-difluoroethylene, 3-fluoropropene, trifluoroethylene, 3,4-dichloro-1-butene, butadiene, isoprene, dicyclopentadiene, norbornene, and acetylene. These may be used alone or in combination of two or more types thereof.

From the viewpoints of easy availability and handleability, the aliphatic unsaturated hydrocarbon monomer is preferably an aliphatic unsaturated hydrocarbon having carbon number of 2 or more, and more preferably an aliphatic hydrocarbon having carbon number of 4 or more. An aliphatic unsaturated hydrocarbon having carbon number of 12 or less is preferred, and an aliphatic hydrocarbon having carbon number of 8 or less is more preferred. Furthermore, from the viewpoints of easy availability, handleability, and easy synthesis, the aliphatic unsaturated hydrocarbon monomer is preferably a conjugated diene. Among them, butadiene, isoprene, and combined use of butadiene and isoprene are preferred.

From the viewpoint of enhancing thermal stability, in the case of using a conjugated diene as a constituent unit of the aliphatic unsaturated hydrocarbon polymer block, it is preferable that the conjugated diene is a hydrogenation product in which a portion or the entirety of the units have been hydrogenated (hereinafter, may be simply referred to as "hydrogenated"). The hydrogenation ratio at that time is preferably 80% or higher, and more preferably 90% or higher. Here, the hydrogenation ratio is a value obtainable by measuring the iodine values of the block copolymer before and after a hydrogenation reaction.

The weight average molecular weight of the block copolymer is, from the viewpoints of the mechanical characteristics and molding processability of the block copolymer, preferably 30,000 or more, and more preferably 50,000 or more, and the weight average molecular weight is preferably 400,000 or less, and more preferably 300,000 or less. The ratio of the weight average molecular weight and the number average molecular weight (Mw/Mn) of the block copolymer is preferably 1.0 or greater, and the ratio is preferably 2.0 or less, and more preferably 1.5 or less. Here, the weight average molecular weight is a weight average molecular weight in terms of polystyrene determined by gel permeation chromatography (GPC) measurement, and the number average molecular weight is a number average molecular weight in terms of polystyrene determined by GPC measurement.

The method for producing the block copolymer is not particularly limited; however, for example, production can be carried out by an anionic polymerization method, a cationic polymerization method, a radical polymerization method, or the like. For example, in the case of anionic polymerization, specifically,
(i) a method in which an alkyllithium compound is used as an initiator, an aromatic vinyl monomer, a conjugated diene monomer, and then an aromatic vinyl monomer are polymerized in this order;
(ii) a method in which an alkyllithium compound is used as an initiator, an aromatic vinyl monomer and a conjugated diene monomer are polymerized in this order, and then performing coupling by adding a coupling agent; and
(iii) a method in which a dilithium compound is used as an initiator, a conjugated diene monomer and then an aromatic vinyl monomer are polymerized in this order, may be mentioned.

In the case of using a conjugated diene as the aliphatic unsaturated hydrocarbon monomer, the amount of a 1,2-bond and the amount of a 3,4-bond of the thermoplastic elastomer can be increased by adding an organic Lewis base at the time of anionic polymerization, and the amount of the 1,2-bond and the amount of the 3,4-bond of the thermoplastic elastomer can be easily controlled by the amount of addition of the organic Lewis base.

Examples of the organic Lewis base include esters such as ethyl acetate; amines such as triethylamine, N,N,N',N'-tetramethylethylenediamine (TMEDA), and N-methylmorpholine; nitrogen-containing heterocyclic aromatic compounds such as pyridine; amides such as dimethylacetamide; ethers such as dimethyl ether, diethyl ether, tetrahydrofuran (THF), and dioxane; glycol ethers such as ethylene glycol dimethyl ether and diethylene glycol dimethyl ether; sulfoxides such as dimethyl sulfoxide; and ketones such as acetone and methyl ethyl ketone.

In the case of subjecting an unhydrogenated polystyrene-based elastomer to a hydrogenation reaction, the reaction can be carried out by dissolving an unhydrogenated polystyrene-based elastomer thus obtained in a solvent that is inert to a hydrogenation catalyst, or using an unhydrogenated polystyrene-based elastomer directly without isolating the elastomer from the reaction liquid, and reacting the elastomer with hydrogen in the presence of a hydrogenation catalyst.

Examples of the hydrogenation catalyst include Raney nickel; a heterogeneous catalyst obtained by supporting a metal such as Pt, Pd, Ru, Rh, or Ni on a simple substance such as carbon, alumina, or diatomaceous earth; a Ziegler catalyst including a combination of a transition metal compound, an alkylaluminum compound, an alkyllithium compound, and the like; and a metallocene catalyst. The hydrogenation reaction can be carried out usually under the conditions of a hydrogen pressure of 0.1 MPa or more and 20 MPa or less, a reaction temperature of 20°C or more and 250°C or less, and a reaction time of 0.1 hour or more and 100 hours or less.

However, the response to stress at the time of applying strain of the sine waveform to a viscoelastic body is defined as complex modulus of elasticity. At this time, a difference in phase occurs between the sine wave of the strain applied and the sine wave of the stress obtainable as a response, and this phase difference is denoted as δ. Furthermore, the complex modulus of elasticity is represented by an equation using a complex number, and the real part of the complex modulus of elasticity is referred to as storage modulus, while the imaginary part is referred to as loss modulus. Particularly, in the case of measuring the dynamic viscoelastic characteristics of a viscoelastic body in the shear mode, those parameters are referred to as complex shear modulus, shear storage modulus, and shear loss modulus, respectively. When the loss modulus is divided by the storage modulus, the resultant is referred to as loss tangent and is denoted as tan δ.

It is preferable that the thermoplastic polyolefinic resin (B1) used for the present invention has a peak at which the tan δ value measured by performing a complex shear viscosity test according to JIS K 7244-10 under the conditions of a frequency of 1 Hz becomes the maximum, at a temperature of -40°C or higher, more preferably -30°C or higher, and even more preferably -20°C or higher. Furthermore, it is preferable that the thermoplastic polyolefinic resin (B1) has a peak at which the tan δ becomes the maximum, at a temperature of 30°C or lower, more preferably 10°C or lower, and even more preferably 0°C or lower. In a case in which the thermoplastic polyolefinic resin (B1) has no peak at which the tan δ value becomes the maximum under the above-described conditions, in the range of -40°C or more and 30°C or less, there is a tendency that the sound insulation properties are not readily exhibited in the temperature range that the thermoplastic polyolefinic resin is used as a laminated glass. Specifically, the tan δ is measured by the method described in the Examples described below.

From the viewpoint of further enhancing the sound insulation properties, the glass transition temperature of the thermoplastic polyolefinic resin (B1) is preferably 10°C or lower, and more preferably -5°C or lower. The lower limit of the glass transition temperature of the thermoplastic polyolefinic resin (B1) is not particularly limited; however, the glass transition temperature of the thermoplastic polyolefinic resin (B1) is preferably -50°C or higher, and preferably -40°C or higher. Regarding the method for measuring the glass transition temperature, DSC (temperature increased at a rate of 10°C/min) may be used.

The thermoplastic polyolefinic resin (B1) is such that the height of at least one tan δ peak measured by performing a complex shear viscosity test according to JIS K 7244-10 under the conditions of a frequency of 1 Hz is preferably 0.2 or higher, more preferably 0.5 or higher, even more preferably 0.75 or higher, and particularly preferably 0.8 or higher. When the height of the tan δ peak under the above-described conditions is lower than 0.2, the sound insulation properties of a film thus obtainable tend to be lowered.

Furthermore, the functional group-containing polyolefinic polymer (B2) is a product obtained by providing at least one functional group selected from the group consisting of a carboxyl group, a boronic acid group, a silanol group, an epoxy group, and an isocyanate group to a polyolefinic polymer. By further incorporating the functional group-containing polyolefinic polymer (B2) into the resin composition of the present invention, the adhesiveness between glass and a film obtainable by molding the resin composition can be enhanced. Furthermore, the functional group-containing polyolefinic polymer (B2) functions as a compatibilizer between the polyvinyl acetal resin (A) and the thermoplastic polyolefinic resin (B1), and thus the transparency of a film obtainable by molding the resin composition can be enhanced.

A carboxyl group, a boronic acid group, a silanol group, an epoxy group, or an isocyanate group, all of which are the functional groups carried by the functional group-containing polyolefinic polymer (B2), is preferable from the viewpoint of high reactivity with the hydroxyl groups in the polyvinyl acetal resin (A). The method for producing the functional group-containing polyolefinic polymer is not particularly limited; however, for example, the polymer is obtained by subjecting an olefin and a monomer having a functional group to random copolymerization, block copolymerization, graft copolymerization, or a graft reaction by a known method. Among these, random copolymerization, graft copolymerization, and a graft reaction are preferred, and a graft reaction product obtainable by a graft reaction is more preferred. Here, a graft reaction product means a product having a functional group introduced into a polymer chain by a post-reaction, such as in the case of maleic anhydride modification.

Regarding the olefin used for the functional group-containing polyolefinic polymer (B2), propylene is preferred. The polymer may be a product obtained by copolymerizing an α-olefin other than propylene and a monomer having the aforementioned functional group, together with propylene. Examples of the α-olefin include ethylene, 1-butene, 1-pentene, 1-hexene, 1-octene, 4-methyl-1-pentene, and cyclohexene. This α-olefin can be copolymerized with a monomer having the aforementioned functional group by a known method, and a method such as random copolymerization, block copolymerization, or graft copolymerization may be adopted. The proportion of these structural units derived from an α-olefin other than propylene with respect to all of the structural units is preferably 0 mol% or more, and the proportion is preferably 45 mol% or less, more preferably 35 mol% or less, and even more preferably 25 mol% or less.

Examples of the monomer having the above-mentioned functional group include vinyl acetate, vinyl chloride, ethylene oxide, propylene oxide, acrylamide, and an unsaturated carboxylic acid or an ester or anhydride thereof. Among them, an unsaturated carboxylic acid or an ester or anhydride thereof is preferred. Examples of the unsaturated carboxylic acid or an ester or anhydride thereof include (meth)acrylic acid, (meth)acrylic acid esters, maleic acid, maleic anhydride, fumaric acid, itaconic acid, itaconic anhydride, nadic acid, and nadic anhydride. Among them, maleic acid and maleic anhydride are more preferred. These monomers may be used alone, or two or more types thereof may be used in combination.

The functional group-containing polyolefinic polymer (B2) is preferably a polypropylene containing a carboxyl group as a functional group, that is, a carboxylic acid-modified polypropylenic resin, and more preferably a maleic acid-modified polypropylenic resin or a maleic anhydride-modified polypropylenic resin, from the viewpoints of the adhesiveness to the interface between the polyvinyl acetal resin (A) and the thermoplastic polyolefinic resin (B1), and transparency.

The functional group-containing polyolefinic polymer (B2) may have a copolymerizable monomer other than an olefin copolymerized therein. Examples of the monomer copolymerizable with the olefin include acrylic acid alkyl esters such as methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate, and 2-ethylhexyl acrylate; and (meth)acrylic acid esters such as methyl methacrylate, ethyl methacrylate, n-propyl methacrylate, isopropyl methacrylate, n-butyl methacrylate, isobutyl methacrylate, n-hexyl methacrylate, isohexyl methacrylate, n-octyl methacrylate, isooctyl methacrylate, and 2-ethylhexyl methacrylate. These (meth)acrylic acid esters may be used alone, or two or more types thereof may be used in combination.

The proportion of the functional groups with respect to all of the structural units of the functional group-containing polyolefinic polymer (B2) is preferably 1 µeq/g or more, more preferably 2 µeq/g or more, and optimally 3 µeq/g or more. The proportion of the functional groups with respect to all of the structural units of the functional group-containing polyolefinic polymer is preferably 1,500 µeq/g or less, more preferably 700 µeq/g or less, and optimally 500 µeq/g or less. When the proportion of the functional groups is smaller than 1 µeq/g, the dispersed particle system of the thermoplastic polyolefinic resin (B) is increased, and turbidity becomes intense. When the proportion is larger than 1,500 µeq/g, the resin composition tends to easily gelate when recycled.

According to the present invention, the functional group-containing polyolefinic polymer (B2) can accomplish the role as the thermoplastic polyolefinic resin (B) mentioned above. Therefore, in the resin composition of the present invention, a resin composition which does not include a thermoplastic polyolefinic resin (B1) that does not contain any functional group, but includes only a functional group-containing polyolefinic polymer (B2) as the thermoplastic polyolefinic resin (B), is also included as one of suitable embodiments.

Regarding the content of the functional group-containing polyolefinic polymer (B2), in a case in which the functional group-containing polyolefinic polymer (B2) is used in combination with the thermoplastic polyolefinic resin (B1), the content is preferably 0.01 part by mass or more, and more preferably 0.04 part by mass or more, with respect to 100 parts by mass of the polyvinyl acetal resin (A). The content of the functional group-containing polyolefinic polymer (B2) is preferably 100 parts by mass or less, more preferably 20 parts by mass or less, even more preferably 10 parts by mass or less, and still more preferably 5 parts by mass or less, with respect to 100 parts by mass of the polyvinyl acetal resin (A). When the content of the functional group-containing polyolefinic polymer (B2) is smaller than 0.01 part by mass, the effect of compatibilizing the polyvinyl acetal resin (A) and the thermoplastic polyolefinic resin (B1) tends to become insufficient. When the content of the functional group-containing polyolefinic polymer is larger than 100 parts by mass, sufficient adhesiveness is obtained; however, a film thus obtainable tends to have poor flexibility. Furthermore, in a case in which the functional group-containing polyolefinic polymer (B2) is used in combination with the thermoplastic polyolefinic resin (B1), it is preferable to use a functional group-containing polyolefinic polymer (B2) having a lower refractive index than the thermoplastic polyolefinic resin (B1).

It is one preferred embodiment that the thermoplastic polyolefinic resin (B) is composed of a thermoplastic polyolefinic resin (B1) and a functional group-containing polyolefinic polymer (B2). In this case, from the viewpoint of enhancing the flexibility of a film thus obtainable, the mass ratio of the content of the thermoplastic polyolefinic resin (B1) and the functional group-containing polyolefinic polymer (B2) (thermoplastic polyolefinic resin (B1) / functional group-containing polyolefinic polymer (B2)) is preferably 1/99 or higher, more preferably 50/50 or higher, even more preferably 70/30 or higher, and particularly preferably 80/20 or higher. Furthermore, from the viewpoint of enhancing the transparency of a film thus obtainable, the mass ratio of the content of the thermoplastic polyolefinic resin (B1) and the content of the functional group-containing polyolefinic polymer (B2) is preferably 99.9/0.1 or lower, and more preferably 99.6/0.4 or lower.

The resin composition of the present invention may include a compatibilizer other than the functional group-containing polyolefinic polymer (B2), in order to disperse the thermoplastic polyolefinic resin (B) more finely. The compatibilizer may be a non-reactive compatibilizer or a reactive compatibilizer. Examples of the non-reactive compatibilizer include ethoxylated nonylphenol. Examples of the reactive compatibilizer include acid anhydrides such as hexahydrophthalic anhydride, hexahydro-4-methylphthalic anhydride, phthalic anhydride, maleic anhydride, succinic anhydride, glutaric anhydride, citraconic anhydride, 3,4,5,6-tetrahydrophthalic anhydride, and cyclohexanedicarboxylic acid anhydride; salicylic acid, boric acid, glycidyl neodecanoate, an epoxy compound, an isocyanate compound, and mixtures thereof.

### (Compound (a) having a higher refractive index than polyvinyl acetal resin (A))

It is one preferred embodiment that the resin composition of the present invention further includes a compound (a) other than the thermoplastic polyolefinic resin (B) having a higher refractive index than the polyvinyl acetal resin (A) (hereinafter, may be simply referred to as compound (a)). From the viewpoint that a film having excellent transparency can be obtained, it is preferable that the compound (a) is a compound having higher compatibility with the polyvinyl acetal resin (A) compared to the compatibility with the thermoplastic polyolefinic resin (B). When the compatibility of the compound (a) with the polyvinyl acetal resin (A) is higher, in a case in which a phase of the thermoplastic polyolefinic resin (B) is dispersed as an island component in a continuous phase of the polyvinyl acetal resin (A), the proportion of the compound (a) included in the polyvinyl acetal resin (A) phase increases, and consequently, the difference between the refractive index of the phase of the polyvinyl acetal resin (A) and the refractive index of the phase of the thermoplastic polyolefinic resin (B) decreases. As a result, transparency is enhanced. Regarding the compound (a), for example, an aromatic plasticizer is preferred. Examples of the aromatic plasticizer include phthalic acid-based plasticizers such as dioctyl phthalate, benzyl butyl phthalate, dibutyl phthalate, dihexyl phthalate, di(2-ethylhexyl) phthalate, and di(2-ethylbutyl) phthalate; a polyester compound such as a polyester polyol between a polyvalent carboxylic acid having an aromatic ring and a polyhydric alcohol; a polyester compound between a polyvalent carboxylic acid and a polyhydric alcohol having an aromatic ring; and an ether compound between a polyhydric alcohol having an aromatic ring and a polyalkylene oxide. Examples of the polyvalent (divalent, trivalent, or higher-valent) carboxylic acid having an aromatic ring include phthalic acid, isophthalic acid, terephthalic acid, trimellitic acid, 1,2-naphthalenedicarboxylic acid, 1,3-naphthalenedicarboxylic acid, 1,4-naphthalenedicarboxylic acid, 1,5-naphthalenedicarboxylic acid, 2,6-naphthalenedicarboxylic acid, and 1,4-phenylenediacetic acid. Examples of the polyhydric (dihydric, trihydric, or higher-hydric) alcohol having an aromatic ring include 1,2-dihydroxybenzene, 1,3-dihydroxybenzene, 1,4-dihyroxybenzene, bisphenol A, bisphenol F, 4,4'-biphenol, bis(4-hydroxyphenyl)sulfone, bis(4-hydroxyphenyl) ether, 1,2-bis(hydroxymethyl)benzene, 1,3-bis(hydroxymethyl)benzene, and 1.4-bis(hydroxymethyl)benzene. Among them, from the viewpoint that transfer of the plasticizer to other resin layers can be suppressed, a polyester polyol having an aromatic group and a hydroxyl group, and an ether compound between a polyhydric alcohol having an aromatic ring and a polyalkylene oxide are preferred.

In addition to that, examples of the compound (a) include a polystyrene having a molecular weight of less than 2,500, an epoxy compound, an inorganic oxide such as acid value zirconium, a halide, a silicon-containing compound (for example, a phenylalkoxysilane compound such as diphenyldimethoxysilane), dipropylene glycol dibenzoate, tripropylene glycol dibenzoate, polypropylene glycol dibenzoate, isodecyl benzoate, 2-ethylhexyl benzoate, diethylene glycol benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bisphenol A bis(2-ethylhexanoate), ethoxylated nonylphenol, and mixtures thereof.

In the case of adding the compound (a), the content of the compound may vary depending on what kind of compounds of the thermoplastic polyolefinic resin (B), polyvinyl acetal resin (A), and compound (a) will be used; however, the content of the compound (a) is preferably 0.1 part by mass or more, more preferably 1 part by mass or more, and even more preferably 5 parts by mass or more, with respect to 100 parts by mass of the polyvinyl acetal resin (A). Furthermore, the amount of addition of the compound (a) is preferably 60 parts by mass or less, more preferably 40 parts by mass or less, and even more preferably 20 parts by mass or less, with respect to 100 parts by mass of the polyvinyl acetal resin (A). When the content of the compound (a) is 0.1 part by mass or more with respect to 100 parts by mass of the polyvinyl acetal resin (A), a sufficient effect of enhancing the transparency of a film is obtained. When the content is 60 parts by mass or less, bleed-out of the compound (a) can be suppressed, or a sufficient effect of enhancing the transparency of a film is obtained.

### (Compound (b) having lower refractive index than thermoplastic polyolefinic resin (B))

It is preferable that the resin composition of the present invention includes a compound (b) other than the polyvinyl acetal resin (A), the compound (b) having a lower refractive index than the thermoplastic polyolefinic resin (B), from the viewpoint that a film having excellent transparency can be obtained. The compound (b) is preferably a compound having higher compatibility with the thermoplastic polyolefinic resin (B), compared to the compatibility with the polyvinyl acetal resin (A). From the viewpoint that a film having excellent transparency can be obtained, the compound (b) is preferably a compound such that the compatibility with the thermoplastic polyolefinic resin (B) is higher compare to the compatibility with the polyvinyl acetal resin (A). When the compatibility of the compound (b) with the thermoplastic polyolefinic resin (B) is higher, in a case in which a phase of the thermoplastic polyolefinic resin (B) is dispersed as an island component in a continuous phase of the polyvinyl acetal resin (A), the proportion of including the compound (b) in the thermoplastic polyolefinic resin (B) phase becomes large, and consequently, the difference between the refractive index of the polyvinyl acetal resin (A) phase and the refractive index of the thermoplastic polyolefinic resin (B) phase becomes small, and as a result, transparency is enhanced. Examples of the compound (b) that enhances transparency include silicone oils. Among silicone oils, methylphenylsilicone oil in which a portion of the side chains of a polysiloxane has been substituted with phenyl groups, is preferred. Examples of the methylphenylsilicone oil include KF-50-100cs (refractive index at 25°C: 1.425), KF-50-300cs (refractive index at 25°C: 1.425), KF-50-1,000cs (refractive index at 25°C: 1.425), KF-50-3,000cs (refractive index at 25°C: 1.425), and KF-53 (refractive index at 25°C: 1.485), all manufactured by Shin-Etsu Chemical Co., Ltd.

In the case of adding the compound (b), the content of the compound (b) is preferably 0.1 part by mass or more, more preferably 1 part by mass or more, and even more preferably 5 parts by mass or more, with respect to 100 parts by mass of the thermoplastic olefinic resin (B). Furthermore, the amount of addition of the compound (b) is preferably 50 parts by mass or less, more preferably 30 parts by mass or less, and even more preferably 20 parts by mass or less, with respect to 100 parts by mass of the thermoplastic olefinic resin (B). When the content of the compound (b) is 0.1 part by mass or more with respect to 100 parts by mass of the thermoplastic olefinic resin, a sufficient effect of enhancing the transparency of a film is obtained. When the content is 50 parts by mass or less, bleed-out of the compound (b) does not occur, and effects such as sound insulation performance, enhancement of mechanical properties, and enhancement of transparency of the film are obtained.

### (Other additive components)

As other components, additives in addition to the above-described compounds can be used. For example, a plasticizer, an antioxidant, an ultraviolet absorber, a photostabilizer, an anti-blocking agent, an adhesiveness adjusting agent, a pigment, a dye, a functional inorganic compound, and a heat-shielding material (for example, inorganic heat-shielding microparticles or an organic heat-shielding material, both having an infrared absorption ability) may be added as necessary.

### (Plasticizer)

The resin composition of the present invention may include a plasticizer other than the compound (a) or compound (b) described above. The type of the plasticizer is not particularly limited; however, for example, a carboxylic acid ester-based plasticizer such as a monovalent carboxylic acid ester-based plasticizer or a polyvalent carboxylic acid ester-based plasticizer; phosphoric acid ester-based plasticizers, organic phosphorous acid ester-based plasticizers; a polymeric plasticizer such as a carboxylic acid polyester-based plasticizer, a carbonic acid polyester-based plasticizer, or a polyalkylene glycol-based plasticizer; an ester compound of a hydroxycarboxylic acid such as castor oil and a polyhydric alcohol; and a hydroxycarboxylic acid ester-based plasticizer such as a hydroxycarboxylic acid and a monohydric alcohol, can also be used.

The monovalent carboxylic acid ester-based plasticizer is a compound obtainable by a condensation reaction between a monovalent carboxylic acid such as butanoic acid, isobutanoic acid, hexanoic acid, 2-ethylbutanoic acid, heptanoic acid, octanoic acid, 2-ethylhexanoic acid, or lauric acid; and a polyhydric alcohol such as ethylene glycol, diethylene glycol, triethylene glycol, tetraethylene glycol, polyethylene glycol, polypropylene glycol, or glycerin. Specific examples of the compound include triethylene glycol di-2-diethylbutanoate, triethylene glycol diheptanoate, triethylene glycol di-2-ethylhexanoate, triethylene glycol dioctanoate, tetraethylene glycol di-2-ethylbutanoate, tetraethylene glycol diheptanoate, tetraethylene glycol di-2-ethylhexanoate, tetraethylene glycol dioctanoate, diethylene glycol di-2-ethylhexanoate, PEG #400 di-2-ethylhexanoate, triethylene glycol mono-2-ethylhexanoate, and a full or partial esterification product of glycerin or diglycerin and 2-ethylhexanoic acid. Here, PEG #400 represents a polyethylene glycol having an average molecular weight of 350 to 450.

The polyvalent carboxylic acid-based plasticizer may be a compound obtainable by a condensation reaction between a polyvalent carboxylic acid such as adipic acid, succinic acid, azelaic acid, or sebacic acid; and an alcohol having 1 to 12 carbon atoms, such as methanol, ethanol, butanol, hexanol, 2-ethylbutanol, heptanol, octanol, 2-ethylhexanol, decanol, dodecanol, butoxyethanol, butoxyethoxyethanol, or benzyl alcohol. Specific examples of the compound include dihexyl adipate, di-2-ethylbutyl adipate, diheptyl adipate, dioctyl adipate, di-2-ethylhexyl adipate, di(butoxyethyl) adipate, di(butoxyethoxyethyl) adipate, mono(2-ethylhexyl) adipate, dibutyl sebacate, dihexyl sebacate, and di-2-ethylbutyl sebacate.

The phosphoric acid-based plasticizer or phosphorous acid-based plasticizer may be a compound obtainable by a condensation reaction between phosphoric acid or phosphorous acid and an alcohol having 1 to 12 carbon atoms, such as methanol, ethanol, butanol, hexanol, 2-ethylbutanol, heptanol, octanol, 2-ethylhexanol, decanol, dodecanol, butoxyethanol, butoxyethoxyethanol, or benzyl alcohol. Specific examples of the compound include trimethyl phosphate, triethyl phosphate, tripropyl phosphate, tributyl phosphate, tri(2-ethylhexyl) phosphate, tri(butoxyethyl) phosphate, and tri(2-ethylhexyl) phosphite.

The carboxylic acid polyester-based plasticizer may be a carboxylic acid polyester obtainable by subjecting a polyvalent carboxylic acid such as oxalic acid, malonic acid, succinic acid, adipic acid, suberic acid, azelaic acid, sebacic acid, dodecanedioic acid, 1,2-cyclohexanedicarboxylic acid, 1,3-cyclohexanedicarboxylic acid, or 1,4-cyclohexanedicarboxylic acid; and a polyhydric alcohol such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol; 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, or 1,4-bis(hydroxymethyl)cyclohexane, to alternating copolymerization; or may be a polymer of a hydroxycarboxylic acid (hydroxycarboxylic acid polyester), such as an aliphatic hydroxycarboxylic acid such as glycolic acid, lactic acid, 2-hydroxybutyric acid, 3-hydroxybutyric acid, 4-hydroxybutyric acid, 6-hydroxyhexanoic acid, 8-hydroxyhexanoic acid, 10-hydroxydecanoic acid, or 12-hydroxydodecanoic acid; or a hydroxycarboxylic acid having an aromatic ring, such as 4-hydroxybenzoic acid or 4-(2-hydroxyethyl)benzoic acid. The carboxylic acid polyester-based plasticizer may also be a carboxylic acid polyester obtainable by subjecting a lactone compound, such as an aliphatic lactone compound such as γ-butyrolactone, γ-valerolactone, δ-valerolactone, β-methyl-δ-valerolactone, δ-hexanolactone, ε-caprolactone, or lactide; or a lactone compound having an aromatic ring, such as phthalide, to ring-opening polymerization. The terminal structures of these carboxylic acid polyesters are not particularly limited, and the terminal structure may be a hydroxyl group or a carboxyl group, or may be an ester bond obtained by reacting a terminal hydroxyl group or a terminal carboxyl group with a monovalent carboxylic acid or a monohydric alcohol.

Examples of the carbonic acid polyester-based plasticizer include carbonic acid polyesters obtainable by subjecting a polyhydric alcohol such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, or 1,4-bis(hydroxymethyl)cyclohexane; and a carbonic acid ester such as dimethyl carbonate or diethyl carbonate, to alternating copolymerization by a transesterification reaction. The terminal structures of these carbonic acid polyester compounds are not particularly limited; however, the terminal structures may be a carbonic acid ester group, a hydroxyl group, or the like.

The polyalkylene glycol-based plasticizer may be a polymer obtainable by subjecting an alkylene oxide such as ethylene oxide, propylene oxide, butylene oxide, or oxetane to ring-opening polymerization using a monohydric alcohol, a polyhydric alcohol, a monovalent carboxylic acid, or a polyvalent carboxylic acid as an initiator.

Regarding the hydroxycarboxylic acid ester-based plasticizer, a monohydric alcohol ester of a hydroxycarboxylic acid (such as methyl ricinoleate, ethyl ricinoleate, butyl ricinoleate, methyl 6-hydroxyhexanoate, ethyl 6-hydroxyhexanoate, or butyl 6-hydroxyhexanoate), or a polyhydric alcohol ester of a hydroxycarboxylic acid [such as ethylene glycol di(6-hydroxyhexanoic acid) ester, diethylene glycol di(6-hydroxyhexanoic acid) ester, triethylene glycol di(6-hydroxyhexanoic acid) ester, 3-methyl-1,5-pentanediol di(6-hydroxyhexanoic acid) ester, 3-methyl-1,5-pentanediol di(2-hydroxybutyric acid) ester, 3-methyl-1,5-pentanediol di(3-hydroxybutyric acid) ester, 3-methyl-1,5-pentanediol di(4-hydroxybutyric acid) ester, triethylene glycol di(2-hydroxybutyric acid) ester, glycerin tri(ricinoleic acid) ester, di(1-(2-ethylhexyl)) L-tartrate, or castor oil], and other than these, a compound in which hydroxycarboxylic acid-derived groups in number of k in a polyhydric alcohol ester of a hydroxycarboxylic acid have been substituted with a carboxylic acid-derived group containing no hydroxy groups or a hydrogen atom can also be used, and as the hydroxycarboxylic acid esters, those obtained by a conventionally known method can be used.

According to the present invention, these plasticizers may be used alone, or two or more types thereof may be used in combination.

In a case in which the resin composition of the present invention includes a plasticizer, from the viewpoints of increasing the compatibility between the plasticizer and the polyvinyl acetal resin (A), and low transferability or non-transferability to other layers, it is preferable to use an ester-based plasticizer or ether-based plasticizer having a melting point of 30°C or lower and a hydroxyl value of 15 mg KOH/g or more and 450 mg KOH/g or less, or an amorphous ester-based plasticizer or ether-based plasticizer having a hydroxyl value of 15 mg KOH/g or more and 450 mg KOH/g or less. Here, the term "amorphous" refers to that the melting point is not observed at a temperature of -20°C or higher. The hydroxyl value is preferably 15 mg KOH/g or greater, more preferably 30 mg KOH/g or greater, and optimally 45 mg KOH/g or greater. Furthermore, the hydroxyl value is preferably 450 mg KOH/g or less, more preferably 360 mg KOH/g or less, and optimally 280 mg KOH/g or less. Examples of the ester-based plasticizer include polyesters (the carboxylic acid polyester-based plasticizer, carbonic acid polyester-based plasticizer, and the like described above) and hydroxycarboxylic acid ester compounds (the hydroxycarboxylic acid ester-based plasticizers and the like described above), all of which satisfy the conditions described above. Examples of the ether-based plasticizer include the polyether compounds (the polyalkylene glycol-based plasticizers and the like described above) that satisfy the conditions described above.

The content of the plasticizer (in a case in which the compound (a) or compound (b) is included, the sum of the contents of the compound (a), the compound (b), and a plasticizer other than these) is preferably 100 parts by mass or less, more preferably 50 parts by mass or less, even more preferably 40 parts by mass or less, still more preferably 30 parts by mass or less, even more preferably 25 parts by mass or less, and particularly preferably 20 parts by mass or less, with respect to 100 parts by mass of the polyvinyl acetal resin (A). When the content of the plasticizer is more than 100 parts by mass with respect to 100 parts by mass of the polyvinyl acetal resin (A), the shear storage modulus of a film obtainable from the resin composition tends to be decreased. Furthermore, two or more types of plasticizers may be used in combination.

In a case in which a film obtainable from the resin composition of the present invention is used as an interlayer film for laminated glass, for usage applications where sound insulation properties and penetration resistance are especially required, the content of the plasticizer is preferably 1 part by mass or more, more preferably 4 parts by mass or more, even more preferably 6 parts by mass or more, and particularly preferably 10 parts by mass or more, with respect to 100 parts by mass of the polyvinyl acetal resin (A).

In a case in which a film obtainable from the resin composition of the present invention is used as an interlayer film for laminated glass, for usage applications where high adhesive force and rigidity are required, the content of the plasticizer is preferably 10 parts by mass or less, more preferably 6 parts by mass or less, and particularly preferably 0 parts by mass (that is, no including a plasticizer), with respect to 100 parts by mass of the polyvinyl acetal resin (A).

Regarding the plasticizer, a compound having a hydroxyl group can be used; however, the proportion of the content of the compound having a hydroxyl group with respect to the total amount of the plasticizer used in the resin composition is preferably 10% by mass or more, more preferably 50% by mass or more, and even more preferably 75% by mass or more. The proportion of the content of the compound having a hydroxyl group with respect to the total amount of the plasticizer is preferably 100% by mass or less. Since a compound having a hydroxyl group has high compatibility with the polyvinyl acetal resin (A) and has low transferability to other layers, a compound having a hydroxyl group can be suitably used.

Examples of the antioxidant include a phenolic antioxidant, a phosphorus-based antioxidant, and a sulfur-based antioxidant. Among these, a phenolic antioxidant is preferred, and an alkyl-substituted phenolic antioxidant is particularly preferred.

Examples of the phenolic antioxidant include acrylate-based compounds such as 2-t-butyl-6-(3-t-butyl-2-hydroxy-5-methylbenzyl)-4-methylphenyl acrylate, 2,4-di-t-amyl-6-(1-(3,5-di-t-amyl-2-hydroxyphenyl)ethyl)phenyl acrylate; alkyl-substituted phenolic compounds such as 2,6-di-t-butyl-4-methylphenol, 2,6-di-t-butyl-4-ethylphenol, octadecyl-3-(3,5-)di-t-butyl-4-hydroxyphenyl) propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dim ethylethyl)-2,4,8,10-tetraoxaspiro[5,5]undecane, 1,1,3-tris(2-methyl-4-hydroxy-5-t-butylphenyl) butane, 1,3,5-trimethyl-2,4,6-tris(3,5-di-t-butyl-4-hydroxybenzyl)benzene, tetrakis(methylene-3-(3',5'-di-t-butyl-4'-hydroxyphenyl)propionate)meth ane, and triethylene glycol bis(3-(3-t-butyl-4-hydroxy-5-methylphenyl) propionate); and triazine-group-containing phenolic compounds such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, and 2-octylthio-4,6-bis-(3,5-di-t-butyl-4-oxyanilino)-1,3,5-triazine.

Examples of the phosphorus-based antioxidant include monophosphite-based compounds such as triphenyl phosphite, diphenyl isodecyl phosphite, phenyl diisodecyl phosphite, tris(nonylphenyl) phosphite, tris(dinonylphenyl) phosphite, tris(2-t-butyl-4-methylphenyl) phosphite, tris(cyclohexylphenyl) phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphe nanthrene-10-oxide, and 10-decyloxy-9,10-dihydro-9-oxa-10-phosphaphenanthrene; and diphosphite-based compounds such as 4,4'-butylidene-bis(3-methyl-6-t-butylphenyl-di-tridecyl phosphite), 4,4'-isopropylidene-bis(phenyl-di-alkyl (C12-C15) phosphite) 4,4'-isopropylidene-bis(diphenylmonoalkyl (C12-C15) phosphite), 1,1,3-tris(2-methyl-4-ditridecyl phosphite-5-t-butylphenyl)butane, and tetrakis(2,4-di-t-butylphenyl)-4,4'-biphenylene phosphite. Among these, a monophosphite-based compound is preferred.

Examples of the sulfur-based antioxidant include dilauryl 3,3'-thiodipropionate, distearyl 3,3-thiodipropionate, lauryl stearyl 3,3'-thiodipropionate, pentaerythritol-tetrakis(β-lauryl thiopropionate), and 3,9-bis(2-dodecylthioethyl)-2,4,8,10-tetraoxaspiro[5.5]undecane.

These antioxidants can be used alone or can be used two or more types thereof in combination. The blending amount of the antioxidant is preferably 0.001 part by mass or more, and more preferably 0.01 part by mass or more, with respect to 100 parts by mass of the polyvinyl acetal resin (A). Furthermore, the blending amount of the antioxidant is preferably 5 parts by mass or less, and more preferably 1 part by mass or less, with respect to 100 parts by mass of the polyvinyl acetal resin (A). When the amount of the antioxidant is less than 0.001 part by mass, sufficient effects may not be readily exhibited. Furthermore, even if the amount is more than 5 parts by mass, it is not expected to obtain any further special effect therefrom.

Furthermore, examples of the ultraviolet absorber include benzotriazole-based ultraviolet absorbers such as 2-(5-methyl-2-hydroxyphenyl)benzotriazole, 2-[2-hydroxy-3,5-bis(α,α'-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl)benzotriazole, and 2-(2'-hydroxy-5'-t-octylphenyl)benzotriazole; hindered amine-based ultraviolet absorbers such as 2,2,6,6-tetramethyl-4-piperidyl benzoate, bis(2,2,6,6-tetramethyl-4-piperidyl) sebacate, bis(1,2,2,6,6-pentamethyl-4-piperidyl)-2-(3,5-di-t-butyl-4-hydroxybenzyl )-2-n-butyl malonate, and 4-(3-(3,5-di-t-butyl-4-hydroxyphenyl)propionyloxy)-1-(2-(3-(3,5-di-t-buty 1-4 -hydroxyphenyl) propionyloxy) ethyl) -2,2,6,6-tetramethylpiperidine; benzoate-based ultraviolet absorbers such as 2,4-di-t-butylphenyl-3,5-di-t-butyl-4-hydroxybenzoate, and hexadecyl-3,5-di-t-butyl-4-hydroxybenzoate; malonic acid ester compounds, and oxalic acid anilide compounds.

Examples of the malonic acid ester-based ultraviolet absorber include dimethyl 2-(p-methoxybenzylidene)malonic acid, tetraethyl-2,2-(1,4-phenylenedimethylidene) bismalonate, and 2-(p-methoxybenzylidene)-bis(1,2,2,6,6-pentamethyl-4-piperidinyl) malonate.

Examples of commercially available products of the malonic acid ester-based ultraviolet absorber include Hostavin B-CAP, Hostavin PR-25, and Hostavin PR-31 (all manufactured by Clariant, Inc.).

Examples of the oxalic acid anilide-based ultraviolet-shielding agent include oxalic acid diamides having an aryl group or the like substituted on the nitrogen atom, such as N-(2-ethylphenyl)-N'-(2-ethoxy-5-t-butylphenyl)oxalic acid diamide, N-(2-ethylphenyl)-N'-(2-ethoxy-phenyl)oxalic acid diamide, and 2-ethyl-2'-ethoxy-oxyanilide ("Sanduvor VSU" manufactured by Clariant, Inc.).

The amount of addition of the ultraviolet absorber is preferably 10 ppm or more, and more preferably 100 ppm or more, on a mass basis with respect to the polyvinyl acetal resin (A). Furthermore, the amount of addition of the ultraviolet absorber is preferably 50,000 ppm or less, and more preferably 10,000 ppm or less, on a mass basis with respect to the polyvinyl acetal resin (A). The amount of addition of the ultraviolet absorber is smaller than 10 ppm, sufficient effects may not be readily exhibited. Furthermore, even if the amount of addition of the ultraviolet absorber is more than 50,000 ppm, it is not expected to obtain any special effect therefrom. These ultraviolet absorbers can be used in combination of two or more types thereof.

The photostabilizer may be a hindered amine-based agent, for example, "ADK STAB LA-57 (trade name)" manufactured by ADEKA Corporation.

If necessary, it is also possible to control the adhesiveness of a film thus obtainable to glass or the like. Regarding the method of controlling adhesiveness, usually, a method of adding an additive that is used as an adhesiveness-adjusting agent for a laminated glass, and a method of adding various additives for adjusting adhesiveness may be mentioned. By such a method, an interlayer film for laminated glass including an adhesiveness-adjusting agent and/or various additives for adjusting adhesiveness is obtained.

Regarding the adhesiveness-adjusting agent, for example, those disclosed in WO 03/033583 A can be used, and an alkali metal salt or an alkaline earth metal salt is preferably used. Examples include salts of potassium, sodium, and magnesium. Examples of above salts include salts of organic acids, such as carboxylic acids such as octanoic acid, hexanoic acid, butyric acid, acetic acid, and formic acid; and inorganic acids such as hydrochloric acid and nitric acid.

An optimal amount of addition of the adhesiveness-adjusting agent may vary depending on the additive used; however, it is preferable to adjust the adhesiveness such that the adhesive force of a film thus obtainable to glass generally has a value of 3 or more and 10 or less in Pummel test (described in WO 03/033583 A or the like). In a case in which particularly high penetration resistance is required, it is more preferable to adjust the adhesive force to be 3 or more and 6 or less, and in a case in which high glass shattering preventability is required, it is more preferable to adjust the adhesive force to be 7 or more and 10 or less. In a case in which high glass shattering preventability is required, not adding an adhesiveness-adjusting agent may be a useful method.

When a heat-shielding material, for example, inorganic heat-shielding microparticles, is incorporated into a film obtainable by molding the resin composition of the present invention, the heat-shielding material imparts a heat-shielding function to the film, and the transmittance at a wavelength of 1,500 mm can be adjusted to be 50% or lower when the film is produced into a laminated glass. Examples of the heat-shielding microparticles include tin-doped indium oxide (ITO), antimony-doped tin oxide (ATO), aluminum-doped zinc oxide (AZO), a metal element complex tungsten oxide represented by General Formula: MₘWOₙ (wherein M represents a metal element; m represents a number 0.01 or greater and 1.0 or less; and n represents a number 2.2 or greater and 3.0 or less), zinc antimonite (ZnSb₂O₅), and lanthanum hexaboride. Among them, ITO, ATO, or a metal element composite tungsten oxide is preferred, and a metal element composite tungsten oxide is more preferred. Examples of the metal element represented by M in the metal element composite tungsten oxide include Cs, Tl, Rb, Na, and K, and Cs is particularly preferred. From the viewpoint of heat-shielding properties, m is preferably 0.2 or greater, and more preferably 0.3 or greater, and m is preferably 0.5 or less, and more preferably 0.4 or less.

As a heat-shielding material for a film obtainable by molding the resin composition of the present invention, other compounds can also be used. Examples include compounds having phthalocyanine, naphthalocyanine, and anthracyanine skeletons, and other organic heat-shielding materials.

The content of the heat-shielding microparticles is preferably 0.1% by mass or more, and more preferably 0.2% by mass or more, with respect to the total amount of the resins used in the layer that constitutes the film. Furthermore, the content of the heat-shielding microparticles is preferably 5% by mass or less, and more preferably 3% by mass or less. When the content of the heat-shielding microparticles is larger than 5% by mass, the transmittance to visible light may be affected. The average particle size of the heat-shielding microparticles is preferably 100 nm or less, and from the viewpoint of transparency, the average particle size is more preferably 50 nm or less. The average particle size of the heat-shielding microparticles as used herein refers to the average particle size measured with a laser diffraction apparatus.

### (Film)

The method for producing the film of the present invention is not particularly limited, and the film can be produced by uniformly kneading the aforementioned resin composition and then performing a known film-forming method such as an extrusion method, a calender method, a pressing method, a casting method, or an inflation method. Among these, particularly a method of producing a film using an extruder is suitably adopted. The resin temperature at the time of performing extrusion is preferably 150°C or higher, more preferably 170°C or higher, and the resin temperature is preferably 250°C or lower, and more preferably 230°C or lower. When the resin temperature is too high, the polyvinyl acetal resin (A) or the thermoplastic polyolefinic resin (B) undergoes decomposition, and there is a risk of deterioration of the resin. In contrast, when the temperature is too low, discharge from the extruder is not stabilized, and the instability causes mechanical troubles. In order to remove volatile substances efficiently, it is preferable to remove volatile substances by reducing pressure through the vent port of the extruder.

The film thus obtained is such that when a film having a thickness of 0.76 ± 0.03 mm (for example, 0.76 mm) is molded and laminated between two sheets of float glass having a thickness of 3 mm, the haze is less than 5%, preferably less than 3%, more preferably less than 2.5%, even more preferably less than 2%, and particularly preferably less than 1%.

### (Laminate)

The resin composition of the present invention not only constitutes, for example, a single-layer film for an interlayer film for laminated glass, but can also constitute layer A in a laminated film composed of a sound insulating layer (hereinafter, referred to as layer B) as an intermediate layer and a protective layer (hereinafter, referred to as layer A) as an outer layer. In this case, regarding the layer B, it is preferable to use a thermoplastic polyolefinic resin (B), which is the same as the thermoplastic polyolefinic resin (B) included in the resin composition that constitutes layer A, from the viewpoint that recycling of trim is further facilitated.

The method for producing a laminate is not particularly limited. It is acceptable that layer A is produced by uniformly kneading the resin composition of the present invention and the performing a known film-forming method such as an extrusion method, a calender method, a pressing method, a casting method, or an inflation method; layer B is produced by a similar method using another resin composition that is different from the resin composition of the present invention; and these are laminated. Alternatively, layer B, layer A, and other necessary layers may be molded by a co-extrusion method.

Among the known film-forming methods, particularly a method of producing a film using an extruder is suitably adopted. The resin temperature at the time of performing extrusion is preferably 150°C or higher, and more preferably 170°C or higher. Furthermore, the resin temperature at the time of performing extrusion is preferably 250°C or lower, and more preferably 230°C or lower. When the resin temperature is too high, the resin to be used undergoes decomposition, and there is a risk of deterioration of the resin. In contrast, when the temperature is too low, discharge from the extruder is not stabilized, and the instability causes mechanical troubles. In order to remove volatile substances efficiently, it is preferable to remove volatile substances by reducing pressure through the vent port of the extruder.

The film thickness of layer A is preferably 50 µm or more, and more preferably 100 µm or more. Furthermore, the film thickness of layer A is preferably 1,500 µm or less, more preferably 1,000 µm or less, and even more preferably 500 µm or less. When the film thickness of layer A is less than 50 µm, the flexural strength of the interlayer film for laminated glass tends to decrease, or the penetration resistance tends to deteriorate. When the film thickness of layer A is more than 1,500 µm, transparency tends to deteriorate.

The film thickness of layer B is preferably 20 µm or more, more preferably 30 µm or more, and even more preferably 50 µm or more. Furthermore, the film thickness of layer B is preferably 400 µm or less, more preferably 250 µm or less, and even more preferably 200 µm or less. When the film thickness of layer B is less than 20 µm, the sound insulation properties tend to deteriorate, and when the film thickness of layer B exceeds 250 µm, mechanical characteristics such as penetration resistance are deteriorated when a laminated glass is produced, and the safety performance as a laminated glass tends to be impaired. In a case in which a plurality of layers B are included in the laminate of the present invention, it is preferable that the total thickness of the layers B satisfies the above-mentioned range.

The ratio of the sum of thicknesses of layer B to the sum of thicknesses of layer A (sum of thicknesses of layer B/sum of thicknesses of layer A) is preferably 1/1 or less, more preferably 1/2 or less, and even more preferably 1/3 or less. Furthermore, the ratio of the sum of thicknesses of layer B to the sum of thicknesses of layer A is preferably 1/30 or more, more preferably 1/15 or more, and even more preferably 1/5 or more. When the proportion is smaller than 1/30, the sound insulation effect of the interlayer film for laminated glass tends to be reduced. On the other hand, when the proportion is larger than 1/1, the shear storage modulus of the laminate at room temperature (about 25°C) and 50°C is decreased, and thereby the flexural strength of the interlayer film for laminated glass tends to be decreased.

The laminate according to the present embodiment has a laminated configuration as shown in Fig. 1, in which layer B 1 is interposed between layer A 2a and layer A 2b. The laminated configuration in the laminate may be determined according to the purpose; however, a laminated configuration of layer A/layer B/layer A, as well as laminated configurations of layer A/layer B/layer A/layer B and layer A/layer B/layer A/layer B/layer A may also be adopted. When a two-layer configuration of layer B/layer A is adopted, the sound insulation properties or flexural strength of the interlayer film for laminated glass tends to deteriorate.

Furthermore, one or more layers of layer other than layer A and layer B (referred to as layer C) may be included, and for example, laminated configurations such as layer A/layer B/layer C/layer A, layer A/layer B/layer A/layer C, layer A/layer C/layer B/layer C/layer A, layer A/layer C/layer B/layer A/layer C, layer A/layer B/layer C/layer A/layer C, layer C/layer A/layer B/layer A/layer C, layer C/layer A/layer B/layer C/layer A/layer C, and layer C/layer A/layer C/layer B/layer C/layer A/layer C may also be adopted. In regard to the laminated configuration described above, the components in the layers C may be identical or different. This also applies to the components in the layers A or layers B.

Incidentally, regarding layer C, a layer formed from a known resin can be used, and for example, polyethylene, polypropylene, polyvinyl chloride, polystyrene, polyvinyl acetate, polyurethane, polytetrafluoroethylene, an acrylic resin, a polyamide, a polyacetal, a polycarbonate; polyethylene terephthalate and polybutylene terephthalate among polyesters; a cyclic polyolefin, polyphenylene sulfide, polytetrafluoroethylene, polysulfone, polyether sulfone, polyallylate, a liquid crystal polymer, and a polyimide can be used. It is also acceptable that additives such as a plasticizer, an antioxidant, an ultraviolet absorber, a photostabilizer, an anti-blocking agent, a pigment, a dye, a heat-shielding material (for example, inorganic heat-shielding microparticles or an organic heat-shielding material, both having an infrared absorption ability), and a functional inorganic compound may be added to layer C as necessary.

Furthermore, it is preferable for the laminate of the present invention that a concavo-convex structure is formed on the surface of the laminate by a conventionally known method such as melt-fracture or embossing. The shape of the melt fracture or embossing is not particularly limited, and any conventionally known shape can be adopted.

The total film thickness of the laminate is preferably 20 µm or more, and more preferably 100 µm or more. The total film thickness of the laminate is preferably 10,000 µm or less, and more preferably 3,000 µm or less. When the film thickness of the laminate is too thin, lamination cannot be achieved effectively at the time of producing a laminated glass, and when the film thickness of the laminate is too thick, this leads to high production cost, which is not preferable.

### (Laminated glass)

A laminated glass having excellent transparency can be obtained using a film obtainable by molding the resin composition of the present invention as an interlayer film for laminated glass. When the laminate of the present invention is used as an interlayer film for laminated glass, a laminated glass having excellent flexural strength can be obtained. Therefore, the interlayer film for laminated glass of the present invention can be suitably used for automotive windscreens, automotive side glasses, automotive sunroofs, glass for head-up display, and the like. In a case in which a laminated glass having the configuration of the laminate of the present invention in the interior is applied to a glass for head-up display, the cross-sectional shape of the laminate to be used is preferably a shape in which one cross-section side is thick, and the other cross-section side is thin. In that case, the cross-sectional shape may be a shape that is wedge-shaped as a whole, in which the thickness gradually decreases from one cross-section side toward the other cross-section side, or may be a shape that is partially wedge-shaped, in which the thickness is identical from one cross-section side to an arbitrary position between that cross-section and the other cross-section side, and the thickness gradually decreases from this arbitrary position to the other cross-section side.

In the laminated glass of the present invention, two sheets of glass are usually used. The thickness of the glass that constitutes the laminated glass of the present invention is not particularly limited; however, the thickness is preferably 100 mm or less. Furthermore, since the film of the present invention has excellent flexural strength, even if a laminated glass is produced using a sheet glass having a thickness of 2.8 mm or less, weight reduction of the laminated glass can be realized without impairing the strength of the laminated glass. From the viewpoint of weight reduction, the thickness of the glass is preferably such that at least one sheet has a thickness of 2.8 mm or less, more preferably 2.5 mm or less, even more preferably 2.0 mm or less, and particularly preferably 1.8 mm or less. Particularly, by having the thickness of one of the glass sheets adjusted to 1.8 mm or more, the thickness of the other glass sheet adjusted to 1.8 mm or less, and the difference between the thicknesses of the respective glass sheets adjusted to 0.2 mm or more, a laminated glass that realizes thickness reduction and weight reduction can be produced without impairing the flexural strength. The difference between the thicknesses of the respective glass sheets is preferably 0.5 mm or more.

In a case in which the laminated glass of the present invention includes a heat-shielding material, it is preferable that the transmittance at a wavelength of 1,500 nm is 50% or lower, and more preferably 20% or lower. When the transmittance at a wavelength of 1,500 nm is 50% or lower, a high infrared light shielding ratio is obtained, and the heat-shielding performance of the laminated glass tends to be enhanced.

### (Method for producing laminated glass)

The laminated glass of the present invention can be produced by a conventionally known method, and examples of the method include a method of using a vacuum laminator apparatus, a method of using a vacuum bag, a method of using a vacuum ring, and a method of using a nip roll. Furthermore, after temporary pressure bonding, a method of submitting the resultant laminated glass to an autoclaving process can also be additionally carried out.

In the case of using a vacuum laminator apparatus, for example, lamination is achieved using a known apparatus that is used for the production of a solar cell, under a reduced pressure of 1 × 10⁻⁶ MPa or more and 3 × 10⁻² MPa or less at a temperature of 100°C or higher and 200°C or lower, and particularly at a temperature of 130°C or higher and 170°C or lower. A method of using a vacuum bag or a vacuum ring is described in, for example, EP 1235683 B, and for example, lamination is achieved at a pressure of about 2 × 10⁻² MPa at a temperature of 130°C or higher and 145°C or lower.

In regard to the method for producing a laminated glass, in the case of using a nip roll, for example, a method of performing temporary pressure bonding of a first time at a temperature equal to or lower than the flow initiation temperature of a polyvinyl acetal resin (A), and then further performing temporary pressure bonding under conditions closer to the flow initiation temperature may be adopted. Specifically, for example, a method of heating the laminated glass at a temperature of 30°C or higher and 100°C or lower with an infrared heater or the like, subsequently performing degassing with a roll, further heating the laminated glass at a temperature of 50°C or higher and 150°C or lower, and then pressing the laminated glass with a roll to induce adhesion or temporary adhesion, may be adopted.

Furthermore, the laminated glass may be obtained by laminating a glass plate coated with layer B is superposed on one surface or both surfaces of layer A, so as to have the configuration of the laminate of the present invention inside the laminated glass.

The autoclaving process that is additionally carried out after temporary pressure bonding may vary depending on the thickness or configuration of the module; however, for example, the autoclaving process is carried out at a pressure of 1 MPa or more and 15 MPa or less and at a temperature of 130°C or higher and 155°C or lower for a duration of 0.5 hour or more and 2 hours or less.

There are no particular limitations on the glass used at the time of producing the laminated glass, and in addition to inorganic glasses such as float plate glass, polished plate glass, figured plate glass, wire-reinforced glass, and heat-absorbing plate glass, conventionally known organic glasses of polymethyl methacrylate and polycarbonate; and the like can be used. These may be colorless or colored, or transparent or non-transparent. These may be used alone, or two or more types thereof may be used in combination.

### (Recycling of trim or out-of-specification product)

The resin composition of the present invention can be obtained by melt-kneading a trim or an out-of-specification product of a laminate (interlayer film for laminated glass) that has, for example, layer A formed from the above-described composition B including a polyvinyl acetal containing a vinyl alcohol unit at a content of 30 mol% or more and 50 mol% or less, as an outer layer; and layer B formed from a composition including the above-described thermoplastic polyolefinic resin (B) as an inner layer. From the viewpoint of the transparency of a film obtainable by recycling, in a case in which the thermoplastic polyolefinic resin (B) is a polystyrenic elastomer, it is preferable that the content of a styrene unit with respect to all of the monomer units of the thermoplastic polyolefinic resin (B) is 25% by mass or less. Furthermore, in this case, from the viewpoint of having excellent adhesiveness of a film obtained by molding the resin composition thus obtainable to glass, or having excellent transparency, it is preferable that layer B includes the functional group-containing polyolefinic polymer described above.

In addition to this, the resin composition of the present invention can be obtained by melt-kneading a trim or an out-of-specification product of a laminate (interlayer film for laminated glass) that has, for example, layer A formed from a composition including the polyvinyl acetal resin (A) and the compound (a) as an outer layer; and layer B formed from a composition including the thermoplastic polyolefinic resin (B) as an inner layer. Furthermore, the resin composition of the present invention can be obtained by melt-kneading a trim or an out-of-specification of a laminate (interlayer film for laminated glass) that has, for example, layer A formed from a composition including the polyvinyl acetal resin (A) as an outer layer; and layer B formed from a composition including the thermoplastic polyolefinic resin (B) and the compound (b) as an inner layer. Furthermore, the resin composition of the present invention can also be obtained by melt-kneading a trim or an out-of-specification product of a laminate (interlayer film for laminated glass) that has, for example, layer A formed from a composition including the polyvinyl acetal resin having an aromatic group (A') as an outer layer; and layer B formed from a composition including the thermoplastic polyolefinic resin (B) as an inner layer.

In the case of recycling a trim or an out-of-specification product of an interlayer film for laminated glass, the interlayer film being obtained by laminating layer A and layer B, a film can be molded by performing melt-kneading using only the interlayer film for laminated glass that is an object of recycling. In addition to that, a film can also be molded by adding, for example, an additional polyvinyl acetal resin (A), an additional thermoplastic polyolefinic resin (B), an additional compound (a), or an additional compound (b), and performing melt-kneading.

In a case in which a fresh polyvinyl acetal resin (A) is additionally added to the interlayer film for laminated glass, which is an object of recycling, it is preferable that the polyvinyl acetal resin (A) is added such that the mass ratio of the additional polyvinyl acetal resin (A) with respect to the resin composition as an object of recycling is 1/99 or higher, and it is more preferable that the polyvinyl acetal resin (A) is added such that the mass ratio is 20/80 or higher. Furthermore, it is preferable that the polyvinyl acetal resin (A) is added such that the mass ratio is 99/1 or lower, and it is more preferable that the polyvinyl acetal resin (A) is added such that the mass ratio is 95/5 or lower. When the mass ratio of the polyvinyl acetal resin (A) is higher than 99/1, the recycling efficiency becomes poor. When the mass ratio is lower than 1/99, the resin is deteriorated when recycling is repeated, and this deterioration tends to cause a problem with the product quality.

In the case of adding additional polyvinyl acetal resin (A) to the interlayer film for laminated glass to be recycled, it is preferable that a plasticizer is additionally added such that the content of the plasticizer becomes 100 parts by mass or less with respect to 100 parts by mass of the total amount of the polyvinyl acetal resin (A) in the resin composition after being recycled. The content of the plasticizer after recycling is preferably 80 parts by mass or less, more preferably 60 parts by mass or less, even more preferably 40 parts by mass or less, and particularly preferably 30 parts by mass or less, with respect to 100 parts by mass of the total amount of the polyvinyl acetal resin (A) in the resin composition after being recycled.

In a case in which a fresh thermoplastic polyolefinic resin (B) is additionally added to the interlayer film for laminated glass, which is an object of recycling, it is preferable that the thermoplastic polyolefinic resin (B) is added such that the mass ratio of the additional thermoplastic polyolefinic resin (B) with respect to the resin composition as an object of recycling is 1/99 or higher, and it is more preferable that the thermoplastic polyolefinic resin (B) such that the mass ratio is 20/80 or higher. Furthermore, it is preferable that the thermoplastic polyolefinic resin (B) is added such that the mass ratio is 99/1 or lower, and it is more preferable that the thermoplastic polyolefinic resin (B) such that the mass ratio is 95/5 or lower. When the mass ratio of the thermoplastic polyolefinic resin (B) is higher than 99/1, the recycling efficiency becomes poor, and when the mass ratio is lower than 1/99, the hue of an article obtainable by recycling may be deteriorated.

In regard to a resin composition obtainable by recycling a laminate (or interlayer film for laminated glass) such as described above, when the resin composition is molded into a film having a thickness of 0.76 ± 0.03 mm and the film is laminated between two sheets of float glass having a thickness of 3 mm, the haze is less than 5%, preferably less than 3%, more preferably less than 2.5%, even more preferably less than 2%, and particularly preferably less than 1%.

In regard to a resin composition obtainable by adding the compound (b) used in a resin composition formed from an interlayer film for laminated glass as an object of recycling, to the resin composition, the haze obtainable at the time of molding the resin composition into a film having a thickness of 0.76 ± 0.03 mm and laminating the film between two sheets of float glass having a thickness of 3 mm, is preferably less than 2%.

In regard to a resin composition obtainable by adding the compound (a) used in a resin composition formed from an interlayer film for laminated glass as an object of recycling, to the resin composition, the haze obtainable at the time of molding the resin composition into a film having a thickness of 0.76 ± 0.03 mm and laminating the film between two sheets of float glass having a thickness of 3 mm, is preferably less than 2%, and more preferably less than 1%.

A resin composition obtainable by recycling a laminate (or interlayer film for laminated glass) such as described above can also be suitably used for usage applications other than the interlayer film for laminated glass. For example, suitable usage applications for the resin composition obtainable by recycling include, for example, adhesives, various binders, physical properties improving agents for various polymers, a thermoplastic polyolefinic resin having improved adhesiveness to other materials, and a thermoplastic polyolefinic resin having improved printing and coatability.

### Examples

Hereinafter, the present invention will be specifically described by way of Examples and Comparative Examples; however, the present invention is not intended to be limited to these Examples. Meanwhile, in the following Examples, unless particularly stated otherwise, the unit "percent (%)" means "percent by mass".

Incidentally, regarding the polyvinyl butyral resin (PVB) used in the following Examples and Comparative Examples, a product obtained by acetalizing a polyvinyl alcohol having the same viscosity average degree of polymerization (viscosity average degree of polymerization measured based on JIS K 6726 "Testing method for polyvinyl alcohol") as the intended viscosity average degree of polymerization, with n-butyl aldehyde in the presence of hydrochloric acid catalyst, was used.

Furthermore, regarding the test sheet described below, a test sheet that had been stored for 24 hours or longer at a temperature of 20°C and a humidity of 60% RH was used.

### [Evaluation methods]

### (Tan δ peak height and tan δ peak temperature of thermoplastic polyolefinic resin (B1))

Based on JIS K7244-10, a distortion-controlled type dynamic viscoelasticity apparatus (manufactured by Rheomix Co., Ltd., ARES) having a disc diameter of 8 mm was used as a parallel plate vibration rheometer. Single-layer sheets (thickness 0.76 mm) formed from elastomers (I) to (III) used in the following Examples and Comparative Examples, and terminal hydroxyl group-modified elastomer (IV) were respectively used as disc-shaped test sheets, and the gap between two sheets of flat plates was completely filled with each of the above-mentioned test sheets. Incidentally, for the test sheet, a sheet that had been stored for 24 hours or longer at a temperature of 20°C and a humidity of 60% RH was used. Vibration was applied to the test sheet at a frequency of 1 Hz at a strain amount of 1.0%, and the measurement temperature was increased from -40°C to 100°C at a constant rate of 1°C/min. The temperature of the test sheet and the discs was maintained until no change was observed in the measured values of the shear loss modulus and the shear storage modulus. In this manner, the tan δ peak height and the tan δ peak temperature were measured for each of the elastomers.

### (Evaluation of total light transmittance and haze)

A film obtained in each of Examples and Comparative Examples described below was interposed between two sheets of commercially available float glass (length 50 mm × width 50 mm × thickness 3 mm), and a laminated glass was produced by a vacuum bag method (conditions: degassing under reduced pressure for 15 minutes at room temperature, heating to 120°C, maintaining for 20 minutes, and then cooling). The total light transmittance and haze of the laminated glass thus produced were evaluated using a haze meter manufactured by Suga Test Instruments Co., Ltd.

### [Materials used in Examples, Comparative Examples, and Reference Examples]

### (Polyvinyl acetal resin (A))

### • Polyvinyl acetal (I):

Polyvinyl butyral resin, which has a degree of acetalization of 64 mol%, a content of a vinyl acetate unit of 0.9 mol%, and a content of a vinyl alcohol unit of 35 mol%, obtained by acetalizing a fully saponified (degree of saponification 99%) polyvinyl alcohol having a viscosity average degree of polymerization of 1,000 using butyl aldehyde.

### • Polyvinyl acetal (II):

Polyvinyl butyral resin, which has a degree of acetalization of 70 mol%, a content of a vinyl acetate unit of 0.9 mol%, and a content of a vinyl alcohol unit of 29 mol%, obtained by acetalizing a fully saponified (degree of saponification 99%) polyvinyl alcohol having a viscosity average degree of polymerization of 1,000 using butyl aldehyde.

### • Polyvinyl acetal (III):

Polyvinyl butyral resin, which has a degree of acetalization of 78 mol%, a content of a vinyl acetate unit of 0.9 mol%, and a content of a vinyl alcohol unit of 21 mol%, obtained by acetalizing a fully saponified (degree of saponification 99%) polyvinyl alcohol having a viscosity average degree of polymerization of 1,000 using butyl aldehyde.

### (Thermoplastic polyolefinic resin (B1))

### • Elastomer (I):

Linear hydrogenated styrene-isoprene-styrene triblock copolymer of 12% by mass of a styrene unit and 88% by mass of an isoprene unit, for which the temperature of a peak at which the tan δ peak height becomes the maximum is -22.6°C (the peak height at this temperature is 0.81).

### • Elastomer (II):

Linear hydrogenated styrene-isoprene-styrene triblock copolymer of 15% by mass of a styrene unit and 85% by mass of an isoprene unit, for which the temperature of a peak at which the tan δ peak height becomes the maximum is -17.9°C (the peak height at this temperature is 0.88).

### • Elastomer (III):

Elastomer (III) is a linear hydrogenated styrene-isoprene-styrene triblock copolymer of 20% by mass of a styrene unit and 80% by mass of an isoprene unit, for which the temperature of a peak at which the tan δ peak height becomes the maximum is -5.2°C (the peak height at this temperature is 0.95).

### • Terminal hydroxyl group-modified elastomer (IV)

Linear hydrogenated styrene-isoprene-styrene triblock copolymer of 12% by mass of a styrene unit and 88% by mass of an isoprene unit, for which the temperature of a peak at which the tan δ peak height becomes the maximum is -22.6°C (the peak height at this temperature is 0.81), the block copolymer having a single terminal modified with a hydroxyl group.

### (Functional group-containing polyolefinic polymer (B2))

### • Maleic anhydride-modified polypropylene (manufactured by Sanyo Chemical Industries, Ltd., UMEX 1010, acid value 52 mg KOH/g) (hereinafter, also described as MAN-PP)

### (Plasticizer)

### • P-510:

Manufactured by KURARAY CO., LTD., polyester polyol (polyester diol formed from 3-methyl-1,5-pentanediol and adipic acid, number average molecular weight per two hydroxyl groups is 500)

### • Castor oil:

Manufactured by Itoh Oil Chemicals Co., Ltd., Castor oil Marutoku A

### (Compound a)

### • BP-3P:

Bisphenol A propylene oxide adduct (manufactured by Sanyo Chemical Industries, Ltd., NEWPOL BP-3P)

### (Reference Example 1)

A film having a thickness of 0.76 mm was molded by an extrusion molding method using polyvinyl acetal (I) only. The results for physical properties evaluation of films thus obtained are shown in Table 1.

### (Example 1)

A film having a thickness of 0.76 mm was molded by an extrusion molding method using 2.0 parts by mass of elastomer (I) and 0.10 part by mass of a maleic anhydride-modified polypropylene (manufactured by Sanyo Chemical Industries, Ltd., UMEX 1010, acid value 52 mg KOH/g) with respect to 100 parts by mass of polyvinyl acetal (I). The composition of the resin composition thus obtained and the results for physical properties evaluation of the film thus obtained are shown in Table 1.

### (Examples 2 and 3)

Films were molded in the same manner as in Example 1, except that the contents of elastomer (I) and the maleic anhydride-modified polypropylene (UMEX 1010) were changed as shown in Table 1. The composition of the resin composition thus obtained and the results for physical properties evaluation of the film thus obtained are shown in Table 1.

### (Example 4)

A film was molded in the same manner as in Example 1, except that the maleic anhydride-modified polypropylene (UMEX 1010) was not added. The composition of the resin composition thus obtained and the results for physical properties evaluation of the film thus obtained are shown in Table 1.

### (Examples 5 and 6)

Films were molded in the same manner as in Example 1, except that the contents of elastomer (I) and the maleic anhydride-modified polypropylene (UMEX 1010) were changed as shown in Table 1, and a plasticizer was added as shown in Table 1. The composition of the resin composition thus obtained and the results for physical properties evaluation of the film thus obtained are shown in Table 1.

**[Table 1]**

| | | | Reference Example 1 | Example 1 | Example 2 | Example 3 | Example 4 | Example 5 | Example 6 |
|---|---|---|---|---|---|---|---|---|---|
| Film thickness (mm) | | | 0.76 | 0.76 | 0.76 | 0.76 | 0.76 | 0.76 | 0.76 |
| Resin composition (Film composition) | Polyvinyl acetal resin (A) | Type | Polyvinyl acetal (I) | Polyvinyl acetal (I) | Polyvinyl acetal (I) | Polyvinyl acetal (I) | Polyvinyl acetal (I) | Polyvinyl acetal (I) | Polyvinyl acetal (I) |
| | | Amount of vinyl alcohol unit (mol%) | 35 | 35 | 35 | 35 | 35 | 35 | 35 |
| | | Content (parts by mass) | 100 | 100 | 100 | 100 | 100 | 100 | 100 |
| | Thermoplastic polyolefinic resin (B1) | Type | - | Elastomer (I) | Elastomer (I) | Elastomer (I) | Elastomer (I) | Elastomer (I) | Elastomer (I) |
| | | Content (parts by mass) | - | 2.0 | 7.0 | 15.1 | 2.0 | 2.3 | 2.3 |
| | Functional group-containing polyolefinic polymer (B2) | Type | - | MAN-PP | MAN-PP | MAN-PP | - | MAN-PP | MAN-PP |
| | | Content (parts by mass) | - | 0.10 | 0.35 | 0.75 | - | 0.12 | 0.12 |
| | Plasticizer | Type | - | - | - | - | - | P-510 | Castor oil |
| | | Content (parts by mass) | - | - | - | - | - | 18.1 | 18.1 |
| Evaluation results | | Total light transmittance (%) | 88.3 | 87.7 | 87.8 | 87.4 | 87.0 | 88.9 | 88.6 |
| | | Haze (%) | 0.5 | 0.9 | 1.3 | 2.4 | 2.8 | 0.7 | 0.6 |

### (Example 7)

Layer A having a thickness of 0.35 mm was molded by an extrusion molding method using 2.0 parts by mass of elastomer (I) and 0.10 part by mass of a maleic anhydride-modified polypropylene (UMEX 1010) with respect to 100 parts by mass of polyvinyl acetal (I). Furthermore, layer B having a thickness of 0.05 mm was molded by an extrusion molding method, using 5 parts by mass of a maleic anhydride-modified polypropylene (UMEX 1010) with respect to 100 parts by mass of elastomer (I). Next, layer B was interposed between two layers of layer A, and then press-molded at 150°C, and thus a laminate having a thickness of 0.75 mm, which was a composite film having a three-layer configuration of A/B/A, was produced. The compositions of layer A and layer B and the results for physical properties evaluation of the laminate thus obtained are shown in Table 2.

### (Example 8)

A laminate was molded in the same manner as in Example 7, except that the contents of elastomer (I) and the maleic anhydride-modified polypropylene (UMEX 1010) were changed in layer B as shown in Table 2, and plasticizer P-510 was added as shown in Table 2. The compositions of layer A and layer B and the results for physical properties evaluation of the laminate thus obtained are shown in Table 2.

### (Reference Example 2)

A laminate was molded in the same manner as in Example 7, except that elastomer (I) and the maleic anhydride-modified polypropylene were not used in layer B, and plasticizer P-510 was added as shown in Table 2. The compositions of layer A and layer B and the results for physical properties evaluation of the laminate thus obtained are shown in Table 2.

### (Example 9)

A trim generated from the laminate obtained in Reference Example 2 was collected, this was melt-kneaded, and a film having a thickness of 0.76 mm was molded by an extrusion molding method. The composition and the results for physical properties evaluation of the film thus obtained are shown in Table 2.

### (Example 10)

A trim generated from the laminate obtained in Reference Example 2 was collected, this was melt-kneaded, and layer A having a thickness of 0.35 mm was molded by an extrusion molding method. Furthermore, layer B having a thickness of 0.05 mm was molded by an extrusion molding method using 5 parts by mass of a maleic anhydride-modified polypropylene (UMEX 1010) with respect to 100 parts by mass of elastomer (I). Next, layer B was interposed between two layers of layer A, and then press-molded at 150°C, and thus a laminate having a thickness of 0.75 mm, which was a composite film having a three-layer configuration, was produced. The compositions of layer A and layer B and the results for physical properties evaluation of the laminate thus obtained are shown in Table 2.

### (Example 11)

18.1 parts by mass of plasticizer P-510 was added as a plasticizer with respect to 100 parts by mass of polyvinyl acetal (I), and thus a polyvinyl butyral resin composition was obtained. A trim generated from the laminate obtained in Reference Example 2 was collected, the trim was mixed with the polyvinyl butyral resin composition, and this mixture was melt-kneaded, and thereby, layer A having a thickness of 0.35 mm was molded by an extrusion molding method. Meanwhile, a trim was mixed into the polyvinyl butyral resin composition such that the polyvinyl acetal (I) component in the trim would be 25 parts by mass with respect to 75 parts by mass of the polyvinyl acetal (I) component in the polyvinyl butyral resin composition. Next, layer B having a thickness of 0.05 mm was molded by an extrusion molding method using 5 parts by mass of maleic anhydride-modified polypropylene (UMEX 1010) with respect to 100 parts by mass of elastomer (I). Next, layer B was interposed between two layers of layer A, and then press-molded at 150°C, and thus a laminate having a thickness of 0.75 mm, which was a composite film having a three-layer configuration, was produced. The compositions of layer A and layer B and the results for physical properties evaluation of the laminate thus obtained are shown in Table 2.

### (Example 12)

A laminate having a thickness of 0.75 mm, which was a composite film having a three-layer configuration of A/B/A, was produced in the same manner as in Example 11, except that layer A was molded so as to have a thickness of 0.25 mm, and layer B was molded so as to have a thickness of 0.25 mm. The compositions of layer A and layer B and the results for physical properties evaluation of the laminate thus obtained are shown in Table 2.

**[Table 2]**

| | | | | Example 7 | Example 8 | Reference Example 2 | Example 9 | Example 10 | Example 11 | Example 12 |
|---|---|---|---|---|---|---|---|---|---|---|
| Layer A | Thickness (mm) | | | 0.35 | 0.35 | 0.35 | 0.76 | 0.35 | 0.35 | 0.25 |
| | Composition | | Type | Polyvinyl acetal (I) | Polyvinyl acetal (I) | Polyvinyl acetal (I) | Polyvinyl acetal (I) | Polyvinyl acetal (I) | Polyvinyl acetal (I) | Polyvinyl acetal (I) |
| | | Polyvinyl acetal resin (A) | Amount of vinyl alcohol unit (mol%) | 35 | 35 | 35 | 35 | 35 | 35 | 35 |
| | | | Content (parts by mass) | 100 | 100 | 100 | 100 | 100 | 100 | 100 |
| | | Thermoplastic polyolefinic resin (B1) | Type | Elastomer (I) | Elastomer (I) | - | Elastomer (1) | Elastomer (I) | Elastomer (I) | Elastomer (I) |
| | | | Content (parts by mass) | 2.0 | 2.3 | - | 7.0 | 7.0 | 1.8 | 1.8 |
| | | Functional group-containing polyolefinic polymer (B2) | Type | MAN-PP | MAN-PP | - | MAN-PP | MAN-PP | MAN-PP | MAN-PP |
| | | | Content (parts by mass) | 0.10 | 0.12 | - | 0.35 | 0.35 | 0.09 | 0.09 |
| | | Plasticizer | Type | - | P-510 | P-510 | P-510 | P-510 | P-510 | P-510 |
| | | | Content (parts by mass) | - | 18.1 | 18.1 | 18.1 | 18.1 | 18.1 | 18.1 |
| Layer B | Thickness (mm) | | | 0.05 | 0.05 | 0.05 | - | 0.05 | 0.05 | 0.25 |
| | Composition | Thermoplastic polyolefinic resin (B1) | Type | Elastomer (I) | Elastomer (I) | Elastomer (I) | - | Elastomer (I) | Elastomer (I) | Elastomer (I) |
| | | | Content (pats by mass) | 100 | 100 | 100 | - | 100 | 100 | 100 |
| | | Functional group-containing polyolefinic polymer (B2) | Type | MAN-PP | MAN-PP | MAN-PP | - | MAN-PP | MAN-PP | MAN-PP |
| | | | Content (parts by mass) | 5 | 5 | 5 | - | 5 | 5 | 5 |
| Evaluation results | | | Total light transmittance (%) | 88.0 | 88.8 | 87.7 | 87.3 | 87.1 | 87.5 | 87.5 |
| | | | Haze (%) | 1.1 | 1.1 | 0.6 | 1.5 | 1.7 | 0.9 | 0.9 |

### (Example 13)

A film was molded in the same manner as in Example 1, except that elastomer (II) was used instead of elastomer (I), and the content of the maleic anhydride-modified polypropylene (UMEX 1010) was changed as shown in Table 3. The composition of the resin composition thus obtained and the results for physical properties evaluation of the film thus obtained are shown in Table 3.

### (Example 14)

A film was molded in the same manner as in Example 1, except that a terminal hydroxyl group-modified elastomer (IV) having the same polymer composition as elastomer (I) and having a hydroxyl group at the terminals was used instead of elastomer (I), and the content of the maleic anhydride-modified polypropylene (UMEX 1010) was changed as shown in Table 3. The composition of the polyvinyl butyral resin composition used and the results for physical properties evaluation of the film thus obtained are shown in Table 3.

### (Comparative Example 1)

A film was molded in the same manner as in Example 1, except that polyvinyl acetal (II) was used instead of polyvinyl acetal (I), and the contents of elastomer (I) and the maleic anhydride-modified polypropylene (UMEX 1010) were changed as shown in Table 3. The composition of the resin composition thus obtained and the results of physical properties evaluation of the film thus obtained are shown in Table 3.

### (Comparative Example 2)

A film was molded in the same manner as in Example 1, except that polyvinyl acetal (III) was used instead of polyvinyl acetal (I), and the contents of elastomer (I) and the maleic anhydride-modified polypropylene (UMEX 1010) were changed as shown in Table 3. The composition of the resin composition thus obtained and the results for physical properties evaluation of the film thus obtained are shown in Table 3.

### (Comparative Example 3)

A film was molded in the same manner as in Example 1, except that elastomer (III) was used instead of elastomer (I), and the content of the maleic anhydride-modified polypropylene (UMEX 1010) was changed as shown in Table 3. The composition of the polyvinyl butyral resin composition used and the results for physical properties evaluation of the film thus obtained are shown in Table 3.

**[Table 3]**

| | | | Example 13 | Example 14 | Comparative Example 1 | Comparative Example 2 | Comparative Example 3 |
|---|---|---|---|---|---|---|---|
| Film thickness (mm ) | | | 0.76 | 0.76 | 0.76 | 0.76 | 0.76 |
| Resin composition (Film composition) | Polyvinyl acetal resin (A) | Ty pe | Polyvinyl acetal (I) | Polyvinyl acetal (I) | Polyvinyl acetal (II) | Polyvinyl acetal (III) | Polyvinyl acetal (I) |
| | | Amount of vinyl alcohol unit (mol%) | 35 | 35 | 29 | 21 | 35 |
| | | Content (parts by mass) | 100 | 100 | 100 | 100 | 100 |
| | Thermoplastic polyolefinic resin (B1) | Type | Elastomer (II) | Terminal hydroxyl group-modified elastomer (IV) | Elastomer (I) | Elastomer (I) | Elastomer (III) |
| | | Content (parts by mass ) | 2.0 | 2.0 | 7.0 | 7.0 | 2.0 |
| | Functional group-containing polyolefinic polymer (B2) | Type | MAN-PP | MAN-PP | MAN-PP | MAN-PP | MAN-PP |
| | | Content (parts by mass) | 0.05 | 0.05 | 0.35 | 0.35 | 0.05 |
| Evaluation results | | Total light transmittance (%) | 87.5 | 88.1 | 88.6 | 89.3 | 92.0 |
| | | Haze (%) | 3.8 | 0.5 | 5.7 | 18.3 | 41.6 |

### (Example 15)

A film was molded in the same manner as in Example 1, except that polyvinyl acetal (II) was used instead of polyvinyl acetal (I), the content of the maleic anhydride-modified polypropylene (UMEX 1010) was changed as shown in Table 4, and a plasticizer was used as shown in Table 4. The composition of the polyvinyl butyral resin composition used and the results for physical properties evaluation of the film thus obtained are shown in Table 4.

### (Example 16)

A film was molded in the same manner as in Example 1, except that elastomer (III) was used instead of elastomer (I), the content of the maleic anhydride-modified polypropylene (UMEX 1010) was changed as shown in Table 4, and a plasticizer was used as shown in Table 4. The composition of the polyvinyl butyral resin composition used and the results for physical properties evaluation of the film thus obtained are shown in Table 4.

### (Comparative Example 4)

A film was molded in the same manner as in Example 1, except that elastomer (III) was used instead of elastomer (I), the content of the maleic anhydride-modified polypropylene (UMEX 1010) was changed as shown in Table 4, and a plasticizer was used as shown in Table 4. The composition of the polyvinyl butyral resin composition used and the results for physical properties evaluation of the film thus obtained are shown in Table 4.

**[Table 4]**

| | | | Example 15 | Example 16 | Comparative Example 4 |
|---|---|---|---|---|---|
| Film thickness (mm) | | | 0.76 | 0.76 | 0.76 |
| Resin composition (Film composition) | Polyvinyl acetal resin (A) | Type | Polyvinyl acetal (II) | Polyvinyl acetal (I) | Polyvinyl acetal (I) |
| | | Amount of vinyl alcohol unit (mol%) | 29 | 35 | 35 |
| | | Content (parts by mass) | 100 | 100 | 100 |
| | Thermoplastic polyolefinic resin (B1) | Type | Elastomer (I) | Elastomer (III) | Elastomer (III) |
| | | Content (parts by mass) | 2.0 | 2.0 | 2.0 |
| | Functional group-containing polyolefinic polymer (B2) | Type | MAN-PP | MAN-PP | MAN-PP |
| | | Content (parts by mass) | 0.05 | 0.05 | 0.05 |
| | Plasticizer | Type | BP-3P | BP-3P | BP-3P |
| | | Content (parts by mass | 8 | 15 | 5 |
| Evaluation results | | Total light transmittance (%) | 87.7 | 88.3 | 88.3 |
| | | Haze (%) | 0.6 | 0.9 | 5.1 |

### Reference Signs List

- 1: Layer B
- 2a: Layer A
- 2b: Layer A

## Claims

1. A resin composition comprising 0.5 to 100 parts by mass of a thermoplastic polyolefinic resin (B) with respect to 100 parts by mass of a polyvinyl acetal resin (A),
wherein when the resin composition is molded into a film having a thickness of 0.76 ± 0.03 mm and the film is laminated between two sheets of float glass having a thickness of 3 mm, the laminate has a haze of less than 5%.

2. The resin composition according to claim 1, wherein a phase of the thermoplastic polyolefinic resin (B) is dispersed as an island component in a continuous phase of the polyvinyl acetal resin (A).

3. The resin composition according to claim 1 or 2, wherein a content of a vinyl alcohol unit in the polyvinyl acetal resin (A) is 15 mol% to 50 mol%.

4. The resin composition according to claim 3, wherein the content of the vinyl alcohol unit in the polyvinyl acetal resin (A) is 30 mol% to 50 mol%.

5. The resin composition according to any one of claims 1 to 4, comprising a compound (a) other than the thermoplastic polyolefinic resin (B), the compound (a) having a higher refractive index than the polyvinyl acetal resin (A).

6. The resin composition according to claim 5, wherein the compound (a) has a hydroxyl group.

7. The resin composition according to any one of claims 1 to 6, comprising a compound (b) other than the polyvinyl acetal resin (A), the compound (b) having a lower refractive index than the thermoplastic polyolefinic resin (B).

8. The resin composition according to any one of claims 1 to 7, wherein the polyvinyl acetal resin (A) is a polyvinyl acetal resin (A') having an aromatic group.

9. The resin composition according to any one of claims 1 to 8, wherein the thermoplastic polyolefinic resin (B) is a copolymer of an aromatic vinyl monomer and a vinyl monomer other than the aromatic vinyl monomer or a conjugated diene monomer, or a hydrogenated product of the copolymer.

10. The resin composition according to claim 9, wherein the thermoplastic polyolefinic resin (B) is a block copolymer.

11. The resin composition according to claim 9 or 10, wherein a content of the aromatic vinyl monomer unit in the thermoplastic polyolefinic resin (B) is 25% by mass or less.

12. The resin composition according to any one of claims 1 to 11, wherein the thermoplastic polyolefinic resin (B) is a thermoplastic polyolefinic resin (B1) having none of functional groups selected from a carboxyl group, a boronic acid group, a silanol group, an epoxy group, and an isocyanate group.

13. The resin composition according to any one of claims 1 to 11, wherein the thermoplastic polyolefinic resin (B) comprises a thermoplastic polyolefinic resin (B1) having none of functional groups selected from a carboxyl group, a boronic acid group, a silanol group, an epoxy group, and an isocyanate group; and a functional group-containing polyolefinic polymer (B2) containing at least one functional group selected from the group consisting of a carboxyl group, a boronic acid group, a silanol group, an epoxy group, and an isocyanate group.

14. The resin composition according to claim 13, wherein a mass ratio B1/B2 of a content of the thermoplastic polyolefinic resin (B1) and a content of the functional group-containing polyolefinic polymer (B2) is 1/99 to 99.9/0.1.

15. The resin composition according to any one of claims 1 to 14, further comprising a plasticizer in an amount of 1 to 100 parts by mass with respect to 100 parts by mass of the polyvinyl acetal resin (A).

16. The resin composition according to claim 15, wherein 10% to 100% by mass of the plasticizer is a compound having a hydroxyl group.

17. A film comprising the resin composition according to any one of claims 1 to 16.

18. An interlayer film for laminated glass, the interlayer film comprising a layer formed from the film according to claim 17.

19. The interlayer film for laminated glass according to claim 18, the interlayer film comprising at least two layers of the layer formed from the film, further comprising a resin layer containing the thermoplastic polyolefinic resin (B),
wherein one layer of the layers formed from the film is disposed on a first surface of the resin layer, and another layer of the layers formed from the film is disposed on a second surface of the resin layer.

20. An interlayer film for laminated glass, the interlayer film comprising layer A formed from composition A including a polyvinyl acetal resin (A) having a content of a vinyl alcohol unit of 30 mol% to 50 mol% as measured according to JIS K 6728; and layer B formed from composition B including a thermoplastic polyolefinic resin (B),
wherein when the interlayer film for laminated glass is melt-kneaded and then molded into a film having a thickness of 0.76 ± 0.03 mm, and the film is laminated between two sheets of float glass having a thickness of 3 mm, the laminate has a haze of less than 5%.

21. An interlayer film for laminated glass, the interlayer film comprising layer A formed from composition A including a polyvinyl acetal resin (A) and a compound (a) other than a thermoplastic polyolefinic resin (B), the compound (a) having a higher refractive index than the polyvinyl acetal resin (A); and layer B formed from composition B including a thermoplastic polyolefinic resin (B),
wherein when the interlayer film for laminated glass is melt-kneaded and then molded into a film having a thickness of 0.76 ± 0.03 mm, and the film is laminated between two sheets of float glass having a thickness of 3 mm, the laminate has a haze of less than 5%.

22. An interlayer film for laminated glass, the interlayer film comprising layer A formed from composition A including a polyvinyl acetal resin (A); and layer B formed from composition B including a thermoplastic polyolefinic resin (B) and a compound (b) other than the polyvinyl acetal resin (A), the compound (b) having a lower refractive index than the thermoplastic polyolefinic resin (B),
wherein when the interlayer film for laminated glass is melt-kneaded and then molded into a film having a thickness of 0.76 ± 0.03 mm, and the film is laminated between two sheets of float glass having a thickness of 3 mm, the laminate has a haze of less than 5%.

23. An interlayer film for laminated glass, the interlayer film comprising layer A including a polyvinyl acetal resin modified with an aromatic group (A'); and layer B including a thermoplastic polyolefinic resin (B),
wherein when the interlayer film for laminated glass is melt-kneaded and then molded into a film having a thickness of 0.76 ± 0.03 mm, and the film is laminated between two sheets of float glass having a thickness of 3 mm, the laminate has a haze of less than 5%.

24. The interlayer film for laminated glass according to any one of claims 21 to 24, wherein the thermoplastic polyolefinic resin (B) includes a thermoplastic polyolefinic resin (B1) having none of functional groups selected from a carboxyl group, a boronic acid group, a silanol group, an epoxy group, and an isocyanate group; and a thermoplastic polyolefinic resin (B2) having at least one functional group selected from the group consisting of a carboxyl group, a boronic acid group, a silanol group, an epoxy group, and an isocyanate group.

25. A laminated glass comprising the interlayer film for laminated glass according to any one of claims 18 to 24 disposed between two sheets of glass.

26. A method for producing a polyvinyl acetal-based resin composition, the method comprising adding the resin composition according to any one of claims 1 to 17 to the polyvinyl acetal resin (A) such that a mass ratio between the polyvinyl acetal resin (A) and the resin composition is 1/99 to 99/1.

27. A method for producing a polyvinyl acetal-based resin composition, the method comprising adding the resin composition according to any one of claims 1 to 17 to the thermoplastic polyolefinic resin (B) such that a mass ratio between the thermoplastic polyolefinic resin (B) and the resin composition is 1/99 to 99/1.
